# EUROPEAN PATENT APPLICATION

(11) **EP 4 683 099 A1**
(43) Date of publication of application: **21.01.2026**
(21) Application number: 25152512.7
(22) Date of filing: 17.01.2025
(51) Int. Cl.: H01M 50/533, H01M 50/536, H01M 50/54

(54) **SECONDARY BATTERY, SECONDARY BATTERY MANUFACTURING METHOD, AND BATTERY PACK**

(30) Priority: 15.07.2024 KR 20240092994
(71) Applicant: SAMSUNG SDI CO., LTD., Yongin-si, Gyeonggi-do 17084 (KR)
(72) Inventor: Yoo, Whee Sang, 16678 Suwon-si, Gyeonggi-do (KR); Park, Ho Lim, 16678 Suwon-si, Gyeonggi-do (KR)
(74) Representative: Gulde & Partner

(57) **Abstract**

A secondary battery includes: a case; an electrode assembly inside the case; a cap assembly sealing the case and including a first terminal and a second terminal; a first tab member extending from the electrode assembly in a first direction; a first sub-plate between the electrode assembly and the case and connected to the first tab member; and a first current collector connected to the first terminal and the first sub-plate.

## Description

### BACKGROUND

### 1. Field

Aspects of embodiments of the present disclosure relate to a secondary battery, a secondary battery manufacturing method, and a battery pack.

### 2. Discussion of Related Art

Generally, due to the recent proliferation of electronic devices using batteries, such as mobile phones, notebook computers, and electric vehicles, the demand for high energy density and high capacity secondary batteries has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions and an electrolyte solution. A lithium secondary battery generates energy via oxidation/reduction reactions when lithium ions are intercalated/deintercalated at the positive and negative electrodes.

The above-described information disclosed in the Background section forms the background of the present disclosure and is intended to improve understanding of the background of the present disclosure. It may include information that does not constitute the related (or prior) art.

### SUMMARY

Embodiments of the present disclosure are directed to a secondary battery exhibiting increased power efficiency, a secondary battery manufacturing method, and a battery pack.

These and other aspects and features of the present disclosure will be described in or will be apparent from the following description of some embodiments of the present disclosure.

A secondary battery, according to a first aspect of the present disclosure, includes a case, an electrode assembly inside the case, a cap assembly sealing the case and including a first terminal and a second terminal, a first tab member extending from the electrode assembly in a first direction, a first sub-plate between the electrode assembly and the case and connected to the first tab member, and a first current collector connected to the first terminal and the first sub-plate.

The first tab member may have a first end surface crossing the first direction, and the first sub-plate may be in contact with the first end surface.

The first sub-plate may be parallel to the first end surface.

An area of the first sub-plate may be greater than an area of the first end surface.

The secondary battery may further include a first sub-welding line on the first sub-plate and the first tab member connecting the first sub-plate to the first tab member.

The first tab member may include a plurality of first tabs arranged in a second direction crossing the first direction, and the secondary battery may further include a first sub-welding line parallel to the second direction.

The first tab member may include a first bending portion bent around a third direction crossing the first direction and the second direction.

The first bending portion may be between the electrode assembly and the first sub-welding line.

The first current collector may include a first terminal plate connected to the first terminal and a first current collecting plate extending from the first terminal plate and facing the first sub-plate in the first direction. The secondary battery may further include a first welding line on the first current collecting plate and the first sub-plate connecting the first current collecting plate to the first sub-plate.

The first current collecting plate may extend from the first terminal plate in a third direction crossing the first direction and the second direction, and the first welding line may be parallel to the third direction.

The secondary battery may further include a first reinforcing welding line on the first current collecting plate and the first sub-plate and crossing the first welding line.

A width of the first reinforcing welding line may be greater than a width of the first welding line.

The secondary battery may further include a second tab member extending from the electrode assembly and spaced apart from the first tab member, a second sub-plate between the electrode assembly and the case and connected to the second tab member, and a second current collector connected to the second terminal and the second sub-plate.

The second tab member may extend from the electrode assembly in a direction opposite to the first direction.

A secondary battery manufacturing method, according to a second aspect of the present disclosure, includes forming a first tab member, bringing the first tab member into contact with a first sub-plate, forming a first sub-welding line on the first tab member and the first sub-plate, bringing the first sub-plate into contact with a first current collecting plate of a first current collector, and forming a first welding line on the first sub-plate and the first current collecting plate.

The first tab member may include a plurality of first tabs extending in a first direction and arranged in a second direction crossing the first direction, and in the forming of the first sub-welding line, the first sub-welding line may be formed in the second direction.

In the forming of the first welding line, the first welding line may be formed in a third direction crossing the first direction and the second direction.

The method may further include forming a first bending portion on the first tab member.

In the forming of the first bending portion, the first tab member may be bent around a third direction crossing the first direction and the second direction.

In some embodiments, the secondary battery manufacturing method may further comprise a step of forming a first reinforcing welding line on the first sub-plate and the first current collecting plate. The first reinforcing welding line may be formed to cross the first welding line.

A battery pack, according to a third aspect of the present disclosure, includes a housing and a plurality of secondary batteries inside the housing. The secondary batteries each include a case, an electrode assembly inside the case, a cap assembly sealing the case and including a first terminal and a second terminal, a first tab member extending from the electrode assembly in a first direction, a first sub-plate between the electrode assembly and the case and connected to the first tab member, and a first current collector connected to the first terminal and the first sub-plate.

### BRIEF DESCRIPTION OF THE DRAWINGS

The drawings attached to this specification illustrate some embodiments of the present disclosure and, together with the detailed description of the present disclosure, further describe aspects and features of the present disclosure. However, the present disclosure should not be construed as being limited to the drawings, in which:
FIG. 1 is a schematic perspective view of a battery pack according to one embodiment of the present disclosure;
FIG. 2 is a schematic perspective view of a secondary battery according to one embodiment of the present disclosure;
FIG. 3 is a schematic exploded perspective view of the secondary battery shown in FIG. 2 according to one embodiment of the present disclosure;
FIG. 4 is a schematic cross-sectional view of the secondary battery shown in FIG. 2 according to one embodiment of the present disclosure;
FIG. 5 is a schematic view of an electrode assembly according to one embodiment of the present disclosure;
FIG. 6 is a schematic view of a first sub-plate and a first current collector according to one embodiment of the present disclosure;
FIG. 7 is a schematic plan view of a first sub-welding line according to one embodiment of the present disclosure;
FIG. 8 is a schematic cross-sectional view of the first sub-welding line according to one embodiment of the present disclosure;
FIG. 9 is a schematic plan view of a first welding line according to one embodiment of the present disclosure;
FIG. 10 is a schematic cross-sectional view of the first welding line according to one embodiment of the present disclosure;
FIG. 11 is a schematic view of a second sub-plate and a second current collector according to one embodiment of the present disclosure;
FIG. 12 is a schematic plan view of a second sub-welding line according to one embodiment of the present disclosure;
FIG. 13 is a schematic cross-sectional view of the second sub-welding line according to one embodiment of the present disclosure;
FIG. 14 is a schematic plan view of a second welding line according to one embodiment of the present disclosure;
FIG. 15 is a schematic cross-sectional view of the second welding line according to one embodiment of the present disclosure;
FIG. 16 is a flowchart describing steps of a secondary battery manufacturing method according to one embodiment of the present disclosure;
FIG. 17 is a flowchart describing steps of connecting a first electrode to a first terminal according to one embodiment of the present disclosure;
FIGS. 18 to 21 are schematic perspective views showing steps of a process of connecting the first electrode to the first terminal according to one embodiment of the present disclosure;
FIG. 22 is a flowchart describing steps of connecting a second electrode to a second terminal according to one embodiment of the present disclosure;
FIG. 23 is a schematic view of a first tab member according to another embodiment of the present disclosure;
FIG. 24 is a schematic view of a second tab member according to another embodiment of the present disclosure;
FIG. 25 is a flowchart describing steps of connecting a first electrode to a first terminal according to another embodiment of the present disclosure;
FIGS. 26 to 29 are schematic plan views of steps of connecting a first electrode to a first terminal according to another embodiment of the present disclosure; and
FIG. 30 is a flowchart describing steps of connecting a second electrode to a second terminal according to another embodiment of the present disclosure.

### DETAILED DESCRIPTION

Herein, some embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

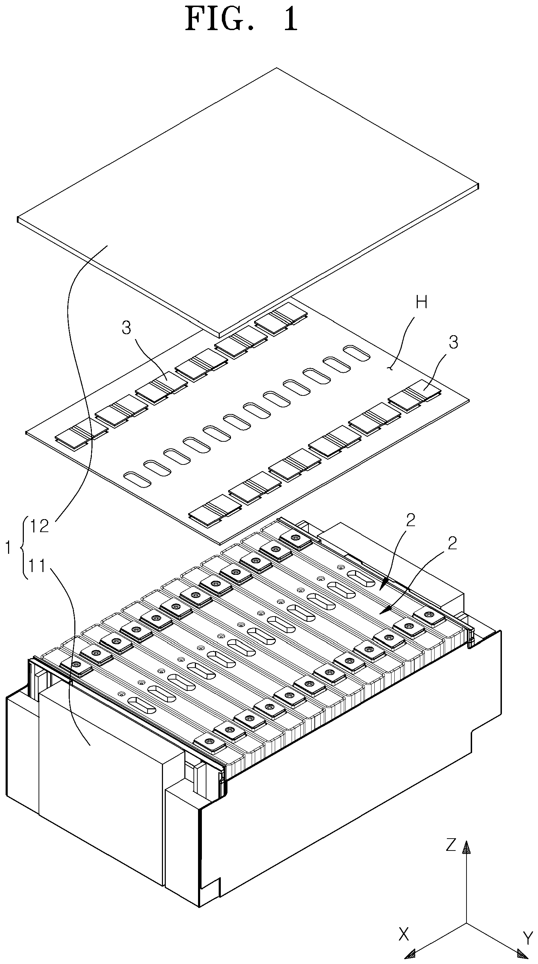

FIG. 1 is a schematic perspective view of a battery pack according to one embodiment of the present disclosure.

Referring to FIG. 1, a battery pack, according to the present embodiment, may include a housing 1, a secondary battery 2, and a busbar 3.

The housing 1 may form a rough (or approximate) exterior of the battery pack and may provide a space in which the secondary battery 2 can be accommodated.

The housing 1, according to the present embodiment, may include a housing body 11 and a cover 12.

The housing body 11 may have a box shape with a hollow interior and an open side (or open surface). A cross-sectional shape of the housing body 11 is not limited to the quadrangular shape as shown in FIG. 1 and may be various shapes, such as a polygon, circle, and oval.

The cover 12 may be coupled to the housing body 11 and may close (e.g., may seal) an internal space of the housing body 11. For example, the cover 12 may have substantially a plate shape and may be disposed to face (e.g., to cover and/or seal) the open side of the housing body 11. The cover 12 may be fixed to the housing body 11 by any suitable coupling method, such as a bolting, welding, or fitting method.

The secondary battery 2 may be a unit structure that stores and supplies power in and to the battery pack. The secondary battery 2 may be disposed inside the housing 1.

A plurality of secondary batteries 2 may be provided in the housing 1. The plurality of secondary batteries 2 may be arranged in two or more columns in at least one of a longitudinal direction (e.g., the X-axis direction based on FIG. 1) and a width direction (e.g., the Y-axis direction based on FIG. 1) of the housing 1. Although FIG. 1 shows an embodiment in which the plurality of secondary batteries 2 are arranged in one column in the longitudinal direction of the housing 1, the arrangement of the plurality of secondary batteries 2 is not limited thereto and may be to have various forms. The plurality of secondary batteries 2 may be arranged in parallel. The number of secondary batteries 2 may be variously changed depending on the size, shape, etc. of the housing 1.

The plurality of secondary batteries 2 may be electrically connected by the busbar 3.

The busbar 3, according to the present embodiment, may be disposed between the cover 12 and the secondary batteries 2. A plurality of busbars 3 may be provided. Each busbar 3 may connect a pair of neighboring secondary batteries 2 in series or parallel.

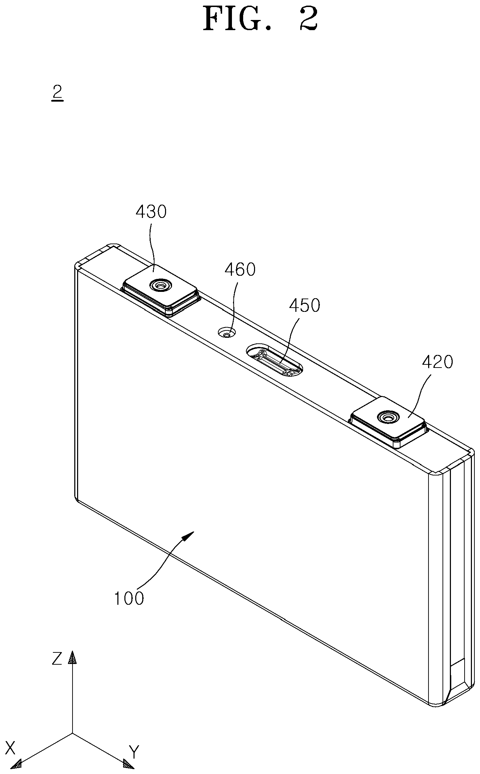

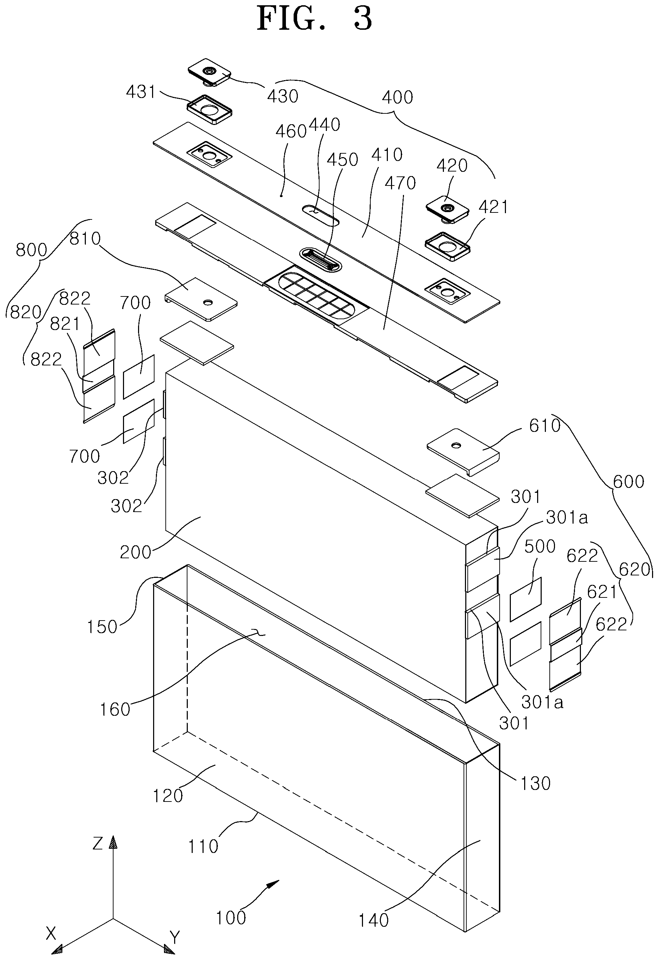

For example, a first terminal 420 of one of the pair of neighboring secondary batteries 2 and a second terminal 430 of another of the pair of neighboring secondary battery 2 may be disposed to face each other in the longitudinal direction of the housing 1 (see, e.g., FIG. 2). For example, a front portion 120 of one of the neighboring secondary batteries 2 may be disposed to face a rear portion 130 of the other secondary battery 2 (see, e.g., FIG. 3).

Both sides (e.g., opposite sides or ends) of the busbar 3 may be respectively connected to the first terminal 420 of one of the pair of neighboring secondary batteries 2 and the second terminal 430 of the other. Therefore, the plurality of secondary batteries 2 may be connected together in series by the busbar 3.

However, the busbar 3 is not limited to this connection form, and both sides thereof may be connected to the first terminal 420 of one of the pair of neighboring secondary batteries 2 and the second terminal 430 of the other or connected to the second terminal 430 of one of the pair of neighboring secondary batteries 2 and the second terminal 430 of the other.

The busbar 3 may be made of an electrically conductive material, such as copper, aluminum, or nickel. The shape of the busbar 3 is not limited to that shown in FIG. 1, and it may be changed to have any of various suitable shapes that may electrically connect neighboring secondary batteries 2.

The plurality of busbars 3 may be supported inside the housing 1 by a busbar holder H.

The busbar holder H, according to the present embodiment, may be formed to have a flat plate shape. The busbar holder H may be disposed between the cover 12 and the secondary batteries 2. The busbar 3 may be fixed to the busbar holder H by any suitable coupling method, such as a fitting coupling, bolting, or injection coupling method. The busbar holder H may include (or may be formed of) an electrically insulating polymer compound material.

Hereinafter, the secondary battery 2 according to various embodiments of the present disclosure will be described.

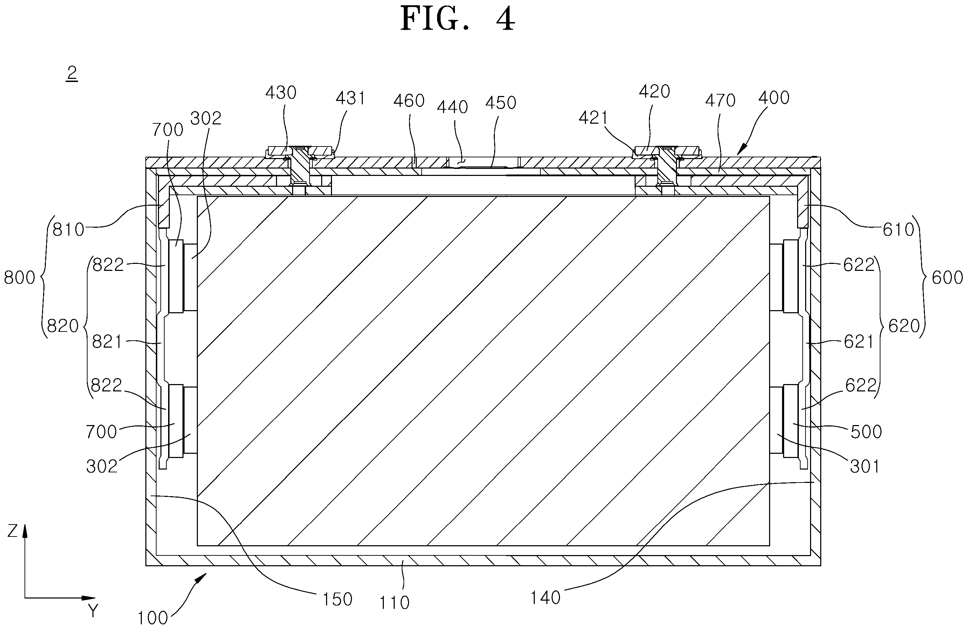

FIG. 2 is a schematic perspective view of a secondary battery according to one embodiment of the present disclosure, FIG. 3 is a schematic exploded perspective view of the secondary battery shown in FIG. 2 according to one embodiment of the present disclosure, and FIG. 4 is a schematic cross-sectional view of the secondary battery shown in FIG. 2 according to one embodiment of the present disclosure.

Hereinafter, an embodiment in which the secondary battery is a prismatic, lithium ion secondary battery will be described. However, the present disclosure is not limited thereto, and the secondary battery may be a lithium polymer battery or cylindrical battery.

Referring to FIGS. 2 to 4, the secondary battery 2, according to the present embodiment, includes a case 100, an electrode assembly 200, a first tab member 301, a cap assembly 400, a first sub-plate 500, and a first current collector 600.

The case 100 may form a rough (or approximate) exterior of the secondary battery 2 and may accommodate the electrode assembly 200.

The case 100, according to the present embodiment, may have a bottom portion (or surface) 110, a front portion (or surface) 120, a rear portion (or surface) 130, a first side portion (or surface) 140, and a second side portion (or surface) 150.

The bottom portion 110 may form an exterior of a lower side (based on the orientation in FIG. 3) of the case 100. The bottom portion 110, according to the present embodiment, may have a rectangular plate shape. The bottom portion 110 may contact (e.g., may be seated on or may rest on) a bottom surface of the housing body 11.

The front portion 120, the rear portion 130, the first side portion 140, and the second side portion 150 may form an exterior of a perimetric surface of the case 100.

The front portion 120, the rear portion 130, the first side portion 140, and the second side portion 150, according to the present embodiment, may each have a plate shape that extends upwardly (based on the orientation of FIG. 3) from a respective edge of the bottom portion 110. The front portion 120, the rear portion 130, the first side portion 140, and the second side portion 150 may be disposed to surround (e.g., to extend around) an upper space of the bottom portion 110. The front portion 120, the rear portion 130, the first side portion 140, and the second side portion 150 may be disposed to form a rectangular cross-sectional shape.

The front portion 120 and the rear portion 130 may be disposed to face each other (e.g., to be opposite to each other) in the longitudinal direction of the housing 1. The front portion 120 and the rear portion 130 may be disposed in parallel with each other. Areas (e.g., surface areas) of the front portion 120 and the rear portion 130 may be the same.

The first side portion 140 and the second side portion 150 may be disposed to face each other (e.g., to be opposite each other) in the width direction of the housing 1. The first side portion 140 and the second side portion 150 may be disposed in parallel with each other. Areas (e.g., surface areas) of the first side portion 140 and the second side portion 150 may be the same. The areas of the first side portion 140 and the second side portion 150 may be smaller than the areas of the front portion 120 and the rear portion 130.

The case 100 may have an opening 160. The opening 160, according to the present embodiment, may be a space surrounded by (e.g., surrounded along its periphery by) upper end portions of the front portion 120, the rear portion 130, the first side portion 140, and the second side portion 150. The opening 160 may interconnect an internal space and an external space of the case 100.

Therefore, the case 100, according to the present embodiment, may have a rectangular parallelepiped shape having an open upper side.

A first direction to be described below may be a direction that is parallel to the Y-axis as used in FIGS. 3 and 4 and may be a direction from the second side portion 150 toward the first side portion 140. A second direction may be a direction that is parallel to the X-axis as used in FIGS. 3 and 4 and may be a direction from the front portion 120 toward the rear portion 130. A third direction may be a direction that is parallel to the Z-axis as used in FIGS. 3 and 4 and may be a direction from the opening 160 toward the bottom portion 110.

The electrode assembly 200 may be a unit structure that performs power charging and discharging operations in a secondary battery. The electrode assembly 200 may be accommodated inside the case 100.

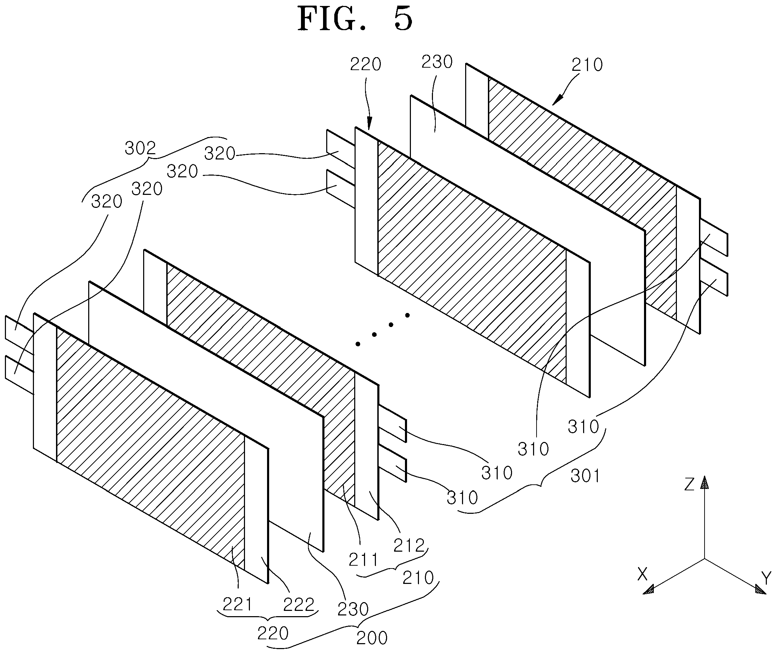

FIG. 5 is a schematic view of an electrode assembly according to one embodiment of the present disclosure.

Referring to FIGS. 2 to 5, the electrode assembly 200, according to the present embodiment, may include a first electrode 210, a second electrode 220, and a separator 230 disposed between the first electrode 210 and the second electrode 220. A plurality of first electrodes 210, separators 230, and second electrodes 220 may be provided.

Hereinafter, an embodiment in which the electrode assembly 200 has a stacked arrangement in which the plurality of first electrodes 210, separators 230, and second electrodes 220 are sequentially stacked in the second direction will be described. However, the electrode assembly 200 is not limited thereto and may have a form in which the first electrodes 210, the separators 230, and the second electrodes 220 are stacked and then wound around a winding shaft in a clockwise or counterclockwise direction.

The first electrode 210 may act as one of a positive electrode and a negative electrode of the electrode assembly 200. Hereinafter, an embodiment in which the first electrode 210 is the positive electrode of the electrode assembly 200 will be described. However, the first electrode 210 is not limited thereto and may act as the negative electrode of the electrode assembly 200.

The first electrode 210, according to the present embodiment, may have a foil shape including a metallic material, such as aluminum or an aluminum alloy. The type, size, shape, etc. of the first electrode 210 are not particularly limited as long as the first electrode 210 has conductivity without causing a chemical change in secondary battery. A cross-sectional shape of the first electrode 210 may be changed to have various shapes in addition to the rectangular shape shown in FIG. 5.

A plurality of first electrodes 210 may be provided in the electrode assembly 200. The plurality of first electrodes 210 may be arranged in the second direction between the front portion 120 and the rear portion 130 of the case 100. The number of first electrodes 210 may be variously changed in design depending on the charging capacity, etc. of the secondary battery 2.

At least a portion of the first electrode 210 may be coated with a first active material layer 211. Both surfaces of the first electrode 210 may be coated with the first active material layer 211, or alternatively, only one surface of the first electrode 210 may be coated with the first active material layer 211.

In the present embodiment, when the first electrode 210 act as a positive electrode, the first active material layer 211 may include a positive electrode active material.

The positive electrode active material may be a compound capable of reversible intercalation and deintercalation of lithium (lithiated intercalation compound). For example, as the positive electrode active material, one or more composite oxides of lithium and a metal selected from the group consisting of cobalt, manganese, nickel, iron, and a combination thereof may be used.

As an example, the positive electrode active material may include at least one of lithium-iron-phosphorus oxide (LiFePO₄, LFP), lithium-manganese-iron-phosphorus oxide (LiMnFePOₐ, LMFP), and lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM) and may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 211 may further include a positive electrode conductive material.

The positive electrode conductive material is used to impart conductivity to the first active material layer 211, and any material that is an electronically conductive material without causing a chemical change may be used. Examples of the positive electrode conductive material may include carbon-based materials, such as natural graphite, artificial graphite, carbon black, acetylene black, Ketjenblack^{®} (a registered trademark of Nouryon Chemicals International B.V.), carbon fibers, carbon nanofibers, and carbon nanotubes, metal-based materials in the form of metal powder or metal fibers containing copper, nickel, aluminum, silver, etc., conductive polymers, such as polyphenylene derivatives, or a mixture thereof.

The first active material layer 211 may further include a positive electrode binder.

The positive electrode binder attaches particles constituting the positive electrode active material and also attaches the positive electrode active material to the first electrode 210.

Examples of the positive electrode binder include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide-imide, polyimide, or a combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and a combination thereof.

When the aqueous binder is used as the positive electrode binder, the aqueous binder may further include a cellulose series compound capable of providing viscosity. As the cellulose series compound, one or more of carboxymethyl cellulose, hydroxypropylmethyl cellulose, methyl cellulose, and an alkali metal salt thereof may be used by being mixed. The alkali metal may be Na, K, or Li.

The dry binder may be a polymer material capable of fiberization, for example, polytetrafluoroethylene, polyvinylidene fluoride, polyvinylidene fluoride-hexafluoropropylene copolymer, polyethylene oxide, or a combination thereof.

The first electrode 210 may have a first uncoated portion 212 uncoated with (e.g., not coated with) the first active material layer 211. The first uncoated portion 212, according to the present embodiment, may be disposed at one end portion region of the first electrode 210 disposed to face the first side portion 140 inside the case 100. However, the first uncoated portion 212 is not limited thereto and may be formed over the entire edge region of the first electrode 210.

The second electrode 220 may act as one of a positive electrode and negative electrode of the electrode assembly 200. Hereinafter, an example in which the second electrode 220 is the negative electrode of the electrode assembly 200 will be described. However, the second electrode 220 is not limited thereto and may act as the positive electrode of the electrode assembly 200.

A plurality of second electrodes 220 may be provided in the electrode assembly 200. The plurality of second electrodes 220 may be arranged in the second direction between the front portion 120 and the rear portion 130 of the case 100. The first electrode 210 and the second electrode 220 may be alternately disposed in the second direction. The second electrode 220 may be spaced a distance (e.g., a predetermined distance) from the first electrode 210 in the second direction.

The second electrode 220, according to the present embodiment, may have a foil shape including a metallic material, such as copper, a copper alloy, nickel, or a nickel alloy. The type, size, shape, etc. of the second electrode 220 are not particularly limited as long as the second electrode 220 has conductivity without causing a chemical change in secondary battery. A cross-sectional shape of the second electrode 220 may be changed to have any of various shapes other than the rectangular shape shown in FIG. 5.

At least a portion of the second electrode 220 may be coated with a second active material layer 221. Both surfaces of the second electrode 220 may be coated with the second active material layer 221, or alternatively, only one surface of the second electrode 220 may be coated with the second active material layer 221.

When the second electrode 220 acts as a negative electrode, the second active material layer 221 may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversible intercalation/deintercalation of lithium ions may include a carbon-based negative electrode active material, for example, crystalline carbon, amorphous carbon, or a combination thereof. Examples of crystalline carbon may include graphite such as amorphous, plate-like, flake-like, spherical, or fiber-like natural graphite or artificial graphite, and examples of amorphous carbon may include soft carbon, hard carbon, mesophase pitch carbide, calcined coke, etc.

As the lithium metal alloy, an alloy of lithium and a metal selected from among Na, K, Rb, Cs, Fr, Be, Mg, Ca, Sr, Si, Sb, Pb, In, Zn, Ba, Ra, Ge, Al, and Sn may be used.

As a material capable of doping and dedepoing of lithium, a Si-based negative electrode active material or a Sn-based negative electrode active material may be used. The Si-based negative electrode active material may be silicon, a silicon-carbon composite, SiOₓ (0<x<2), a Si-Q alloy (Q is selected from among an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, an Sn-based alloy, or a combination thereof.

The silicon-carbon composite may be a composite of silicon and amorphous carbon. According to one embodiment, the silicon-carbon composite may be in the form of silicon particles and amorphous carbon coated on surfaces of the silicon particles. For example, the silicon-carbon composite may include a secondary particle (core) in which primary silicon particles are agglomerated and an amorphous carbon coating layer (shell) located on a surface of the secondary particle. The amorphous carbon may be located between the primary silicon particles, for example, so that the primary silicon particles may be coated with amorphous carbon. The secondary particles may be present by being dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with a carbon-based negative electrode active material.

The second active material layer 221 may further include a negative electrode conductive material and a negative electrode binder.

The negative electrode conductive material is used to impart conductivity to the second active material layer 221, and any material that is an electrically conductive material without causing a chemical change may be used. Examples of the negative electrode conductive material may include carbon-based materials, such as natural graphite, artificial graphite, carbon black, acetylene black, Ketjenblack^{®}, carbon fibers, carbon nanofibers, and carbon nanotubes, metal-based materials in the form of metal powder or metal fibers containing copper, nickel, aluminum, silver, etc., conductive polymers, such as polyphenylene derivatives, or a mixture thereof.

The negative electrode binder attaches particles constituting the negative electrode active material and also attaches the negative electrode active material to the second electrode 220.

Examples of the negative electrode binder include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide-imide, polyimide, or a combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenolic resin, epoxy resin, polyvinyl alcohol, and a combination thereof.

When the aqueous binder is used as the negative electrode binder, the aqueous binder may further include a cellulose series compound capable of providing viscosity. As the cellulose series compound, one or more of carboxymethyl cellulose, hydroxypropylmethyl cellulose, methyl cellulose, and an alkali metal salt thereof may be used by being mixed. The alkali metal may be Na, K, or Li.

The dry binder may be a polymer material capable of fiberization, for example, polytetrafluoroethylene, polyvinylidene fluoride, polyvinylidene fluoride-hexafluoropropylene copolymer, polyethylene oxide, or a combination thereof.

The second electrode 220 may have a second uncoated portion 222 uncoated with (e.g., that is not coated with) the second active material layer 221. The second uncoated portion 222, according to the present embodiment, may be disposed in another end portion region of the second electrode 220 disposed to face the second side portion 150 inside the case 100. However, the second uncoated portion 222 is not limited thereto and may be formed over the entire edge region of the second electrode 220.

The separator 230 may be disposed between the first electrode 210 and the second electrode 220. The separator 230 may prevent a short between the first electrode 210 and the second electrode 220 while allowing the movement of lithium ions between the first electrode 210 and the second electrode 220.

The separator 230 may be disposed to entirely cover a surface region of the electrode assembly 200. Therefore, the separator 230 may prevent the first electrode 210 and the second electrode 220 from being directly exposed to the outside of the electrode assembly 200.

As the separator 230, a multilayered membrane including two or more layers of polyethylene, polypropylene, polyvinylidene fluoride may be used, and a mixed multilayered membrane, such as a two-layer separator of polyethylene/polypropylene, a three-layer separator of polyethylene/polypropylene/polyethylene, or a three-layer separator of polypropylene/polyethylene/polypropylene may be used.

The separator 230 may include a porous substrate and a coating layer including an organic material, an inorganic material, or a combination thereof located on one surface or both surfaces of the porous substrate.

The porous substrate may be a polymer film made of one polymer selected from polyolefins, such as polyethylene and polypropylene, polyesters, such as polyethylene terephthalate and polybutylene terephthalate, polyacetal, polyamide, polyimide, polycarbonate, polyether ketone, polyaryletherketone, polyetherimide, polyamide-imide, polybenzimidazole, polyether sulfone, polyphenylene oxide, cyclic olefin copolymer, polyphenylene sulfide, polyethylene naphthalate, glass fiber, Teflon, and polytetrafluoroethylene, or a copolymer or mixture of two or more of the above materials.

The organic material may include a polyvinylidene fluoride-based polymer or a (meth)acrylic-based polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic and inorganic materials may be present in one coating layer by being mixed or present in a form in which a coating layer including an organic material and a coating layer including an inorganic material are stacked.

The first tab member 301 may be connected to the first electrode 210. Because the first electrode 210 is exemplified as a positive electrode, the first tab member 301 may act as a positive electrode tab of the secondary battery 2. However, the first tab member 301 is not limited thereto, and when the first electrode 210 is a negative electrode, it may act as a negative electrode tab of the secondary battery 2.

The first tab member 301 may extend from the electrode assembly 200 in the first direction. For example, the first tab member 301 may extend from the electrode assembly 200 to the first side portion 140 inside the case 100.

The first tab member 301 may have a first end surface 301a disposed to intersect with respect to the first direction. The first end surface 301a, according to the present embodiment, may be a portion of the entire perimetric surface of the first tab member 301 that faces the first side portion 140 in the first direction. The first end surface 301a may be disposed perpendicular to the first direction. The first end surface 301a may be disposed parallel to the first side portion 140.

A plurality of first tab members 301 may be provided. The plurality of first tab members 301 may be arranged in the third direction. As an example, a pair of first tab members 301, according to the present embodiment, may be formed, and the pair of first tab members 301 may be disposed to be spaced a distance (e.g., a predetermined distance) from each other in the third direction.

The first tab member 301, according to the present embodiment, may include a plurality of first tabs 310.

The first tab 310, according to the present embodiment, may have a foil shape extending from the first uncoated portion 212 of the first electrode 210 in the first direction. The first tab 310 may have a substantially rectangular shape. However, the shape of the first tab 310 is not limited thereto and may be changed to have various shapes.

The first tab 310 may be formed integrally with the first electrode 210. For example, the first tab 310 may be the remaining region of the first uncoated portion 212 that remains after a partial region of the first uncoated portion 212 is cut or removed by notching processing, etc. In another embodiment, the first tab 310 may be manufactured separately from the first electrode 210 and then connected to the first uncoated portion 212 by welding, etc. A material of the first tab 310 may be the same as the material of the first electrode 210.

The number of first tabs 310 may be the same as the number of first electrodes 210. Each of the first tabs 310 may extend from the first uncoated portion 212 of one of the first electrodes 210. The neighboring first tabs 310 may be disposed to face each other in the second direction. For example, the plurality of first tabs 310 may be arranged in the second direction. The neighboring first tabs 310 may be arranged in parallel. Therefore, the first tab member 301, according to the present embodiment, may be an assembly of the plurality of first tabs 310 arranged in the second direction. In addition, the first end surface 301a may be an assembly of end surfaces of the plurality of first tabs 310 arranged in the second direction. The neighboring first tabs 310 may be in contact with each other and spaced apart from each other by the thickness of the separator 230.

The secondary battery 2, according to the present embodiment, may further include a second tab member 302.

The second tab member 302 may be connected to the second electrode 220. Because the second electrode 220 is exemplified as a negative electrode, the second tab member 302 may act as a negative electrode tab of the secondary battery 2. However, the second tab member 302 is not limited thereto, and when the second electrode 220 is a positive electrode, it may act as a positive electrode tab of the secondary battery 2.

The second tab member 302 may extend from the electrode assembly 200 in a direction opposite to the first direction. For example, the second tab member 302 may extend from the electrode assembly 200 to the second side portion 150 inside the case 100. For example, the first tab member 301 and the second tab member 302 may extend in opposite directions from the electrode assembly 200.

The second tab member 302 may have a second end surface 302a disposed to intersect with respect to the first direction. The second end surface 302a, according to the present embodiment, may be a portion of the entire perimetric surface of the second tab member 302 that faces the second side portion 150 in the first direction. The second end surface 302a may be disposed perpendicular to the first direction. The second end surface 302a may be disposed parallel to the second side portion 150.

A plurality of second tab members 302 may be provided. The plurality of second tab members 302 may be arranged in the third direction. As an example, a pair of second tab members 302, according to the present embodiment, may be formed, and the pair of second tab members 302 may be disposed to be spaced a distance (e.g., a predetermined distance) from each other in the third direction.

The second tab member 302 may include a plurality of second tabs 320.

The second tab 320 according to the present embodiment may have a foil shape extending from the second uncoated portion 222 of the second electrode 220 in a direction opposite to the first direction. The second tab 320 may have a substantially rectangular shape. However, the shape of the second tab 320 is not limited thereto and may be changed to have various shapes.

The second tab 320 may be formed integrally with the second electrode 220. For example, the second tab 320 may be the remaining region of the second uncoated portion 222 that remains after a partial region of the second uncoated portion 222 is cut or removed by notching processing, etc. In another embodiment, the second tab 320 may be manufactured separately from the second electrode 220 and then connected to the second uncoated portion 222 by welding, etc. A material of the second tab 320 may be the same as the material of the second electrode 220.

The number of second tabs 320 may be the same as the number of second electrodes 220. Each of the second tabs 320 may extend from the second uncoated portion 222 of one of the second electrodes 220. The neighboring second tabs 320 may be disposed to face each other in the second direction. For example, the plurality of second tabs 320 may be arranged in the second direction. The neighboring second tabs 320 may be arranged in parallel. Therefore, the second tab member 302, according to the present embodiment, may be an assembly of the plurality of second tabs 320 arranged in the second direction. In addition, the second end surface 302a may be an assembly of end surfaces of the plurality of second tabs 320 arranged in the second direction. The neighboring second tabs 320 may be in contact with each other and spaced apart from each other by the thickness of the separator 230.

The cap assembly 400 may be coupled to the case 100 to seal the case 100. The cap assembly 400 may be disposed to face the electrode assembly 200 in the third direction.

The cap assembly 400, according to the present embodiment, may include a cap plate 410, a first terminal 420, and a second terminal 430.

The cap plate 410 may form a rough (e.g., approximate) exterior of the cap assembly 400 and may support the first terminal 420 and the second terminal 430.

The cap plate 410, according to the present embodiment, may have a flat shape. The cap plate 410 may be disposed in (or on) the opening 160 in the case 100. The cap plate 410 may be disposed to face the electrode assembly 200 in the third direction. For example, the cap plate 410 may be disposed at a location spaced a distance (e.g., a predetermined distance) from the electrode assembly 200 in the third direction. The cap plate 410 may be disposed parallel to the bottom portion 110 of the case 100.

The cap plate 410 may be seated on an upper end portion of the case 100, more specifically, upper end portions of the front portion 120, the rear portion 130, the first side portion 140, and the second side portion 150. The cap plate 410 may be connected to the case 100 by any suitable coupling method, such as a welding, bolting, or fitting method.

The first terminal 420 may protrude outwardly from the cap plate 410. The first terminal 420 may be electrically connected to the first electrode 210. When the first electrode 210, according to the present embodiment, acts as a positive electrode, the first terminal 420 may be exemplified as a positive electrode terminal of the secondary battery 2.

The first terminal 420, according to the present embodiment, may be inserted into the cap plate 410. An upper end portion of the first terminal 420 may protrude from the cap plate 410 in the first direction. Although FIG. 3 shows an embodiment in which the first terminal 420 has a rectangular cross-sectional shape, the cross-sectional shape of the first terminal 420 is not limited thereto and may be changed to have various shapes, such as a circle, oval, and polygon. The first terminal 420 may be made of an electrically conductive material, such as aluminum, nickel, or copper.

A first gasket 421 may be installed between the cap plate 410 and the first terminal 420. The first gasket 421 may electrically insulate the cap plate 410 and the first terminal 420 from each other and may block moisture or foreign substances from being introduced between the cap plate 410 and the first terminal 420.

The first gasket 421, according to the present embodiment, may be made of an insulating material, such as polyethylene (PE), polypropylene (PP), polyethylene terephthalate (PET), or rubber. The first gasket 421 may be fixed between the cap plate 410 and the first terminal 420 by pressing, injection, adhesion, etc.

The second terminal 430 may protrude outwardly from the cap plate 410 at a location spaced apart from the first terminal 420. The second terminal 430 may be electrically connected to the second electrode 220. When the second electrode 220 acts as a negative electrode, the second terminal 430 may be exemplified as a negative electrode terminal of the secondary battery 2.

The second terminal 430, according to the present embodiment, may be inserted into the cap plate 410. An upper end portion of the second terminal 430 may protrude from the cap plate 410 in the first direction. Although FIG. 3 shows an embodiment in which the second terminal 430 has a rectangular cross-sectional shape, the cross-sectional shape of the second terminal 430 is not limited thereto and may be changed to have various shapes, such as a circle, oval, and polygon. The second terminal 430 may be made of an electrically conductive material, such as aluminum, nickel, or copper. The second terminal 430 may be disposed at a location spaced a distance (e.g., a predetermined distance) from the first terminal 420 in a direction opposite to the first direction.

A second gasket 431 may be installed between the cap plate 410 and the second terminal 430. The second gasket 431 may electrically insulate the cap plate 410 and the second terminal 430 from each other and may block moisture or foreign substances from being introduced between the cap plate 410 and the second terminal 430.

The second gasket 431, according to the present embodiment, may be made of an insulating material, such as polyethylene (PE), polypropylene (PP), polyethylene terephthalate (PET), or rubber. The second gasket 431 may be fixed between the cap plate 410 and the first terminal 420 by pressing, injection, adhesion, etc.

The cap assembly 400, according to the present embodiment, may further include a vent hole (e.g., a vent opening) 440 and a vent 450.

The vent hole 440, according to the present embodiment, may be formed to have a hole shape that passes vertically through both surfaces of the cap plate 410 in the third direction. The vent hole 440 may act as a configuration (e.g., guide) that provides a path through which flames, gas, smoke, etc. formed (or generated) inside the case 100 are discharged to the outside of the case 100 when the secondary battery 2 experiences thermal runaway due to an overcurrent, etc. The vent hole 440 may be disposed between the first terminal 420 and the second terminal 430. A cross-sectional shape of the vent hole 440 may be changed to have various shapes, such as an oval, circle, and polygon.

The vent 450 may be installed in the vent hole 440 and may open and close according to a change in internal pressure of the case 100. For example, the vent 450 may close (e.g., may seal) the vent hole 440 when the secondary battery 2 operates normally to block an electrolyte inside the case 100 from leaking to the outside of the case 100 or moisture, foreign substances, etc. from flowing into the case 100. The vent 450 may open (e.g., the vent 450 may burst to open) the vent hole 440 when the secondary battery 2 experiences thermal runaway to guide flames, gas, smoke, etc. formed inside the case 100 to be discharged to the outside of the case 100.

The vent 450, according to the present embodiment, may be formed to have substantially a plate shape. The vent 450 may be fixed to the cap plate 410 by any suitable coupling method, such as a welding, bolting, or fitting method. The vent 450 may be disposed inside the vent hole 440 or disposed above or below the cap plate 410 to face the vent hole 440 in the first direction.

The thickness of the vent 450 parallel to the third direction may be smaller than the thickness of the cap plate 410. Therefore, the vent 450 may be configured to be easily ruptured or broken when the internal pressure of the case 100 increases. The vent 450 may have a notch that is concave inwardly from the vent 450 to ensure rupturing (e.g., bursting) when the internal pressure of the case 100 increases.

The cap assembly 400, according to the present embodiment, may further include an electrolyte injection port 460, which is formed to pass through the cap plate 410 and in which a sealing plug may be installed. The electrolyte injection port 460 may be disposed to be spaced a distance (e.g., a predetermined distance) from the vent hole 440 in the first direction or in a direction opposite to the first direction. The electrolyte injection port 460 may be disposed between the first terminal 420 and the second terminal 430.

The cap assembly 400, according to the present embodiment, may further include an insulating plate 470.

The insulating plate 470 may be disposed between the cap plate 410 and the electrode assembly 200. The insulating plate 470 may prevent direct contact between the cap plate 410 and the electrode assembly 200 to insulate the cap plate 410 and the electrode assembly 200. The insulating plate 470 may fix a location of the electrode assembly 200 inside the case 100. The insulating plate 470 can prevent damage to the electrode assembly 200 when the cap plate 410 is deformed to the inside of the case 100 due to an external impact, etc.

The insulating plate 470, according to the present embodiment, may be disposed to face the electrode assembly 200 in the third direction inside the case 100. For example, the cap plate 410, the insulating plate 470, and the electrode assembly 200 may be disposed sequentially in the third direction. The insulating plate 470 may be fixed to an inner surface of the case 100 by any suitable coupling method, such as a fitting, welding, bolting, or adhesion method. The insulating plate 470 may be in contact with one surface of the electrode assembly 200 disposed to face the opening 160. The insulating plate 470 may be made of an insulating material, such as polyethylene (PE), polypropylene (PP), polyethylene terephthalate (PET), or rubber.

The first sub-plate 500 may be disposed between the electrode assembly 200 and the case 100. The first sub-plate 500 may be connected to the first tab member 301. The first sub-plate 500 may constantly maintain an area of the first end surface 301a by restraining the relative movement of the plurality of first tabs 310 constituting the first tab member 301 and may provide electrical connection between the first tab member 301 and the first current collector 600. Therefore, the first sub-plate 500 can prevent electrical connections to some of the first tabs 310 from being missed due to the relative movement of the first tabs 310.

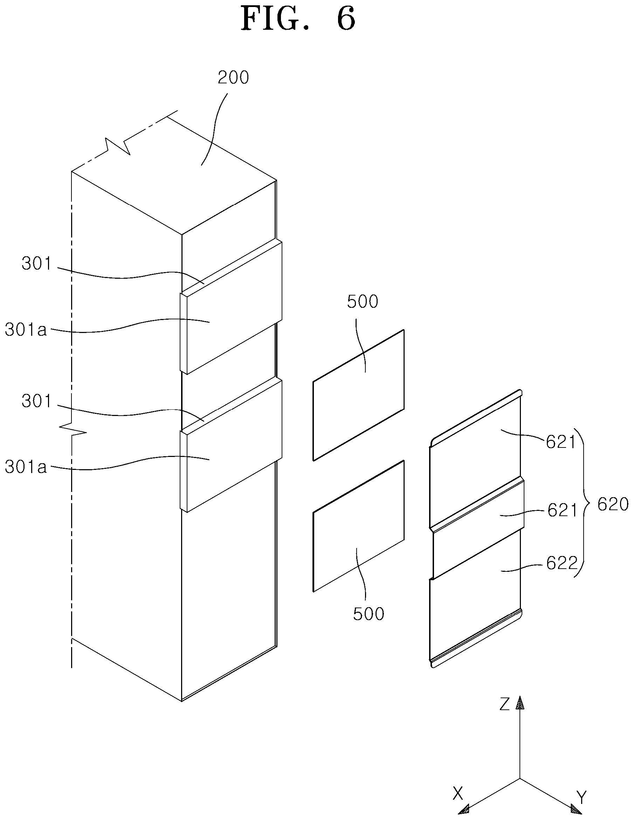

FIG. 6 is a schematic view of a first sub-plate and a first current collector according to one embodiment of the present disclosure.

Referring to FIGS. 2 to 6, the first sub-plate 500, according to the present embodiment, may be formed to have a substantially flat plate shape. The first sub-plate 500 may be disposed between the first end surface 301a of the first tab member 301 and the first side portion 140. The first sub-plate 500 may be disposed parallel to the first end surface 301a and the first side portion 140. One surface of the first sub-plate 500 may be in contact with the first end surface 301a of the first tab member 301. In such an embodiment, an end portion of the first tab 310 may be vertically in contact with the first end surface 301a of the first tab member 301 without bending or deformation. An area (e.g., a surface area) of the first sub-plate 500 may be greater than the area (e.g., the surface area) of the first end surface 301a. Therefore, the first sub-plate 500 may be in contact with all end portions of the plurality of first tabs 310. In addition to the quadrangular shape shown in FIG. 6, the shape of the first sub-plate 500 may be changed to have various shapes, such as a circle, oval, and polygon.

A plurality of first sub-plates 500 may be provided. The number of first sub-plates 500 may be the same as the number of first tab members 301. Each of the first sub-plates 500 may be in contact with the first end surface 301a of one of the first tab members 301.

The first sub-plate 500 may be made of an electrically conductive material, such as aluminum, copper, or nickel.

The first sub-plate 500 and the first tab member 301 may be mutually bonded by laser welding. As an example, the first sub-plate 500 and the first tab member 301 may be provided with a first sub-welding line 501 connecting the first sub-plate 500 to the first tab member 301.

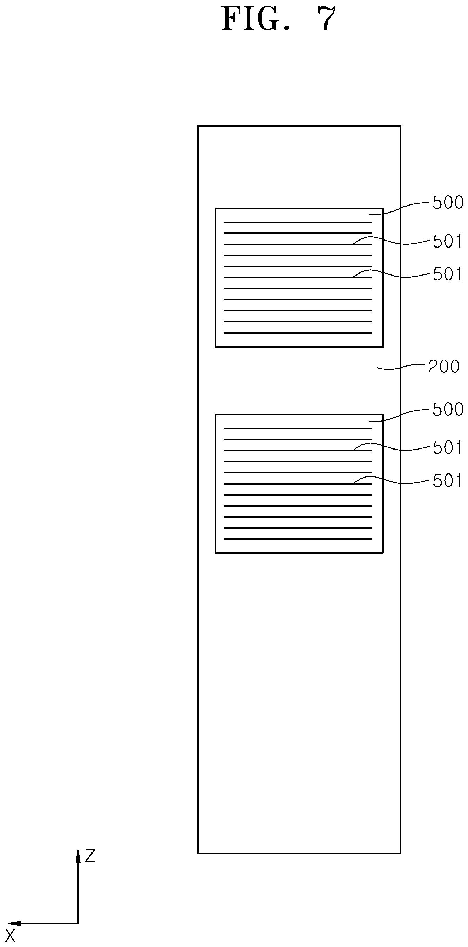

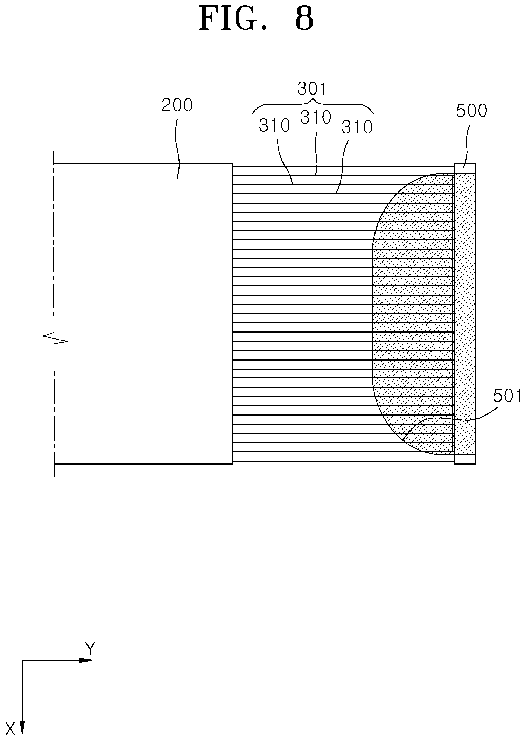

FIG. 7 is a schematic plan view of a first sub-welding line according to one embodiment of the present disclosure, and FIG. 8 is a schematic cross-sectional view of the first sub-welding line according to one embodiment of the present disclosure.

Referring to FIGS. 2 to 8, the first sub-welding line 501, according to the present embodiment, may extend from the first sub-plate 500 to the first tab member 301. The first sub-welding line 501 may be formed by curing a mixture of the first sub-plate 500 and the first tab member 301 after they are melted by heat generated during laser welding.

The first sub-welding line 501 may linearly protrude to an outer surface of the first sub-plate 500 disposed to face the first side portion 140. The first sub-welding line 501 may be disposed parallel to the second direction. Therefore, the first sub-welding line 501 may bond the plurality of first tabs 310 stacked in the second direction to the first sub-plate 500.

A plurality of first sub-welding lines 501 may be provided. The plurality of first sub-welding lines 501 may be arranged in the third direction on the first sub-plate 500.

The first current collector 600 may be connected to the first terminal 420 and the first sub-plate 500. The first current collector 600 may electrically connect the first terminal 420 to the first sub-plate 500. The first current collector 600 may be made of an electrically conductive material, such as aluminum, copper, or nickel.

The first current collector 600, according to the present embodiment, may include a first terminal plate 610 and a first current collecting plate 620.

The first terminal plate 610 may be connected to the first terminal 420.

The first terminal plate 610, according to the present embodiment, may be disposed between the electrode assembly 200 and the first terminal 420. The first terminal plate 610 may be spaced a distance (e.g., a predetermined distance) from a lower surface of the first terminal 420 in the third direction. The first terminal plate 610 may be mechanically and electrically connected to the first terminal 420 by a rivet, a bolt, etc. In another embodiment, the first terminal plate 610 may be in direct contact with the lower surface of the first terminal 420 and mechanically and electrically connected to the first terminal 420 by welding, etc.

The first terminal plate 610 may be disposed inside the insulating plate 470 or, alternatively, may be disposed above or below the insulating plate 470. A specific shape of a first body 511 may be changed to have various shapes that may be connected to the first terminal 420 in addition to the shapes shown in FIGS. 3 and 4.

The first current collecting plate 620 may extend from the first terminal plate 610 in the third direction and may be connected to the first sub-plate 500. The first current collecting plate 620 may be disposed to face the first sub-plate 500 in the first direction. The first current collecting plate 620 may be in direct contact with the first sub-plate 500.

The first current collecting plate 620, according to the present embodiment, may include a first center plate 621 and a first extension plate 622.

The first center plate 621 may form a central exterior of the first current collecting plate 620.

The first center plate 621, according to the present embodiment, may be disposed between the electrode assembly 200 and the first side portion 140. The first center plate 621 may be disposed to face a side surface of the electrode assembly 200 located between the neighboring first tab members 301 in the first direction.

Both end portions of the first center plate 621 may extend a distance (e.g., a predetermined distance) toward the electrode assembly 200. Extending distances of both end portions of the first center plate 621 may be variously changed within a distance range in which the first extension plate 622, to be described in more detail below, may be in contact with the first sub-plate 500.

The first extension plate 622 may extend from the first center plate 621 and may be in contact with the first sub-plate 500.

The first extension plate 622, according to the present embodiment, may be formed to have a substantially flat plate shape. The first extension plate 622 may extend from the first center plate 621 in a direction parallel to the third direction. The first extension plate 622 may be disposed to face the outer surface of the first sub-plate 500 in the first direction. An inner surface of the first extension plate 622 may be in direct contact with the outer surface of the first sub-plate 500.

A pair of first extension plates 622 may be provided. The pair of first extension plates 622 may extend from both end portions of the first center plate 621 in the third direction and in a direction opposite to the third direction, respectively. The pair of first extension plates 622 may be in contact, individually, with different first sub-plates 500.

The first current collecting plate 620 and the first sub-plate 500 may be mutually bonded by laser welding. As an example, the first current collecting plate 620 and the first sub-plate 500 may be provided with a first welding line 601 connecting the first current collecting plate 620 to the first sub-plate 500.

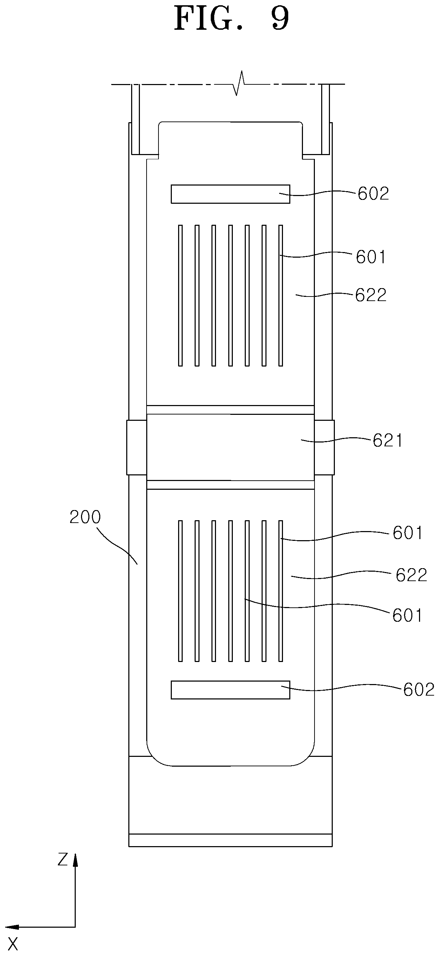

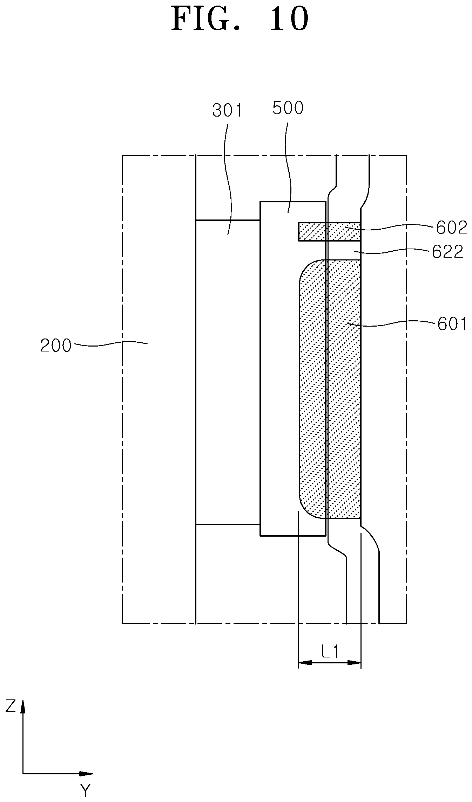

FIG. 9 is a schematic plan view of a first welding line according to one embodiment of the present disclosure, and FIG. 10 is a schematic cross-sectional view of the first welding line according to one embodiment of the present disclosure.

Referring to FIGS. 2 to 10, the first welding line 601, according to the present embodiment, may extend from the first extension plate 622 to the first sub-plate 500. The first welding line 601 may be formed by curing a mixture of the first extension plate 622 and the first sub-plate 500 that are melted by heat generated during laser welding.

The first welding line 601 may linearly protrude on an outer surface of the first extension plate 622 disposed to face the first side portion 140. The first welding line 601 may be disposed parallel to the third direction. Therefore, the first welding line 601 can prevent thermal deformation of the first current collecting plate 620 in the longitudinal direction during operation of the secondary battery 2 by reinforcing the longitudinal rigidity of the first current collecting plate 620 extending in the third direction.

A depth L1 of the first welding line 601 may be about 1 mm. The depth of the first welding line 601 may be a distance between both end portions of the first welding line 601 parallel to the first direction.

A plurality of first welding lines 601 may be provided. The plurality of first welding lines 601 may be arranged in the second direction on the first extension plate 622.

The first current collecting plate 620 and the first sub-plate 500 may be provided with a first reinforcing welding line 602 that reinforces bonding strength of the first current collecting plate 620 and the first sub-plate 500.

The first reinforcing welding line 602, according to the present embodiment, may extend from the first extension plate 622 to the first sub-plate 500. The first reinforcing welding line 602 may be formed by curing a mixture of the first extension plate 622 and the first sub-plate 500 that are melted by heat generated during laser welding.

The first reinforcing welding line 602 may linearly protrude on the outer surface of the first extension plate 622 disposed to face the first side portion 140.

The first reinforcing welding line 602 may be disposed to cross the first welding line 601. As an example, the first reinforcing welding line 602 may be disposed parallel to the second direction. Therefore, the first reinforcing welding line 602 can prevent thermal deformation of the first current collecting plate 620 in the width direction separately from the first welding line 601 during operation of the secondary battery 2.

A width of the first reinforcing welding line 602 may be greater than a width of the first welding line 601. The width of the first reinforcing welding line 602 may be a distance between both end portions of the first reinforcing welding line 602 parallel to the third direction, and the width of the first welding line 601 may be a distance between both end portions of the first welding line 601 parallel to the third direction. Therefore, the first reinforcing welding line 602 can increase a current path between the first sub-plate 500 and the first extension plate 622 and may improve the performance of the secondary battery 2 by lowering electrical resistance.

Although FIGS. 9 and 10 show an embodiment in which one first reinforcing welding line 602 is formed on each first extension plate 622, the present disclosure is not limited thereto, and a plurality of first reinforcing welding lines 602 may be formed on each first extension plate 622.

The secondary battery 2, according to the present embodiment, may further include a second sub-plate 700 and a second current collector 800.

The second sub-plate 700 may be disposed between the electrode assembly 200 and the case 100. The second sub-plate 700 may be connected to the second tab member 302. The second sub-plate 700 may constantly maintain an area of the second end surface 302a by restraining the relative movement of the plurality of second tabs 320 constituting the second tab member 302 and may provide electrical connection between the second tab member 302 and the second current collector 800. Therefore, the second sub-plate 700 can prevent electrical connections to some of the second tabs 320 from being missed due to the relative movement of the second tabs 320.

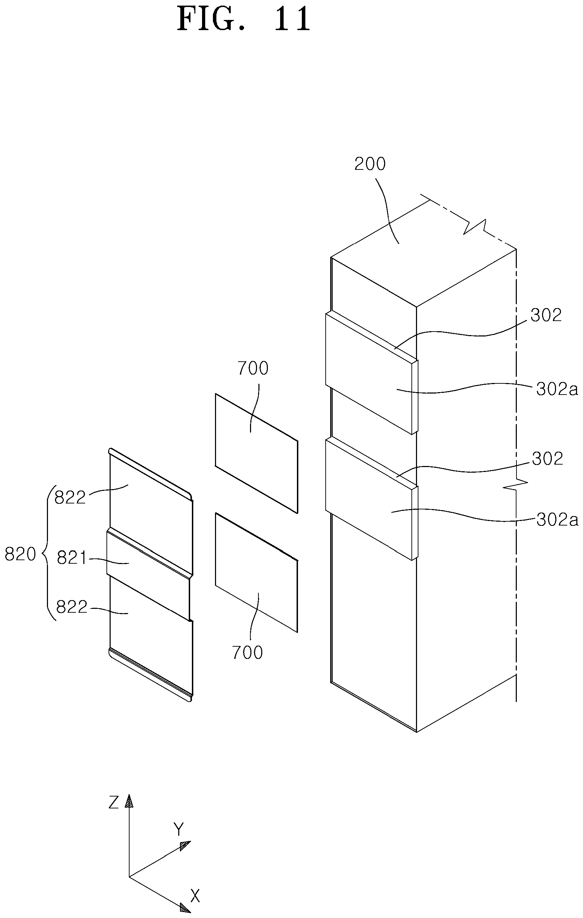

FIG. 11 is a schematic view of a second sub-plate and a second current collector according to one embodiment of the present disclosure.

Referring to FIGS. 3, 4, and 11, the second sub-plate 700, according to the present embodiment, may have a substantially flat plate shape. The second sub-plate 700 may be disposed between the second end surface 302a of the second tab member 302 and the second side portion 150. The second sub-plate 700 may be disposed parallel to the second end surface 302a and the second side portion 150. One surface of the second sub-plate 700 may be in contact with the second end surface 302a of the second tab member 302. In such an embodiment, an end portion of the second tab 320 may be in contact vertically with the second end surface 302a of the second tab member 302 without bending or deformation. An area of the second sub-plate 700 may be greater than the area of the second end surface 302a. Therefore, the second sub-plate 700 may be in contact with all end portions of the plurality of second tabs 320. In addition to the quadrangular shape shown in FIG. 11, the shape of the second sub-plate 700 may be changed to have various shapes, such as a circle, oval, and polygon.

A plurality of second sub-plates 700 may be provided. The number of second sub-plates 700 may be the same as the number of second tab members 302. Each of the second sub-plates 700 may be in contact with the second end surface 302a of one of the second tab members 302.

The second sub-plate 700 may be made of an electrically conductive material, such as aluminum, copper, or nickel.

The second sub-plate 700 and the second tab member 302 may be bonded by laser welding. As an example, the second sub-plate 700 and the second tab member 302 may be provided with a second sub-welding line 701 connecting the second sub-plate 700 to the second tab member 302.

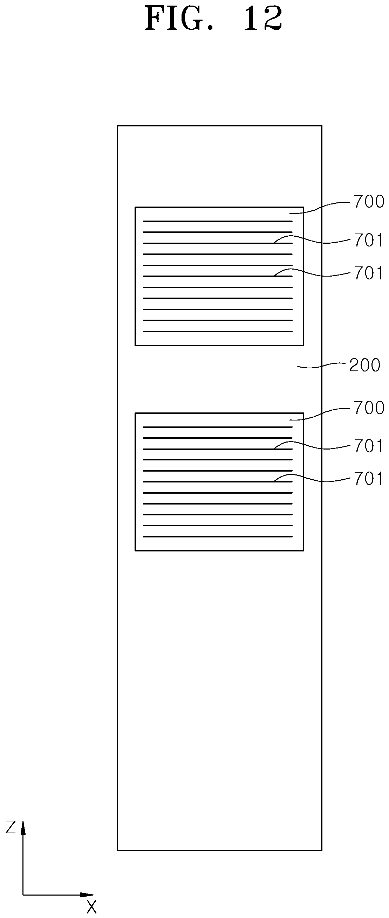

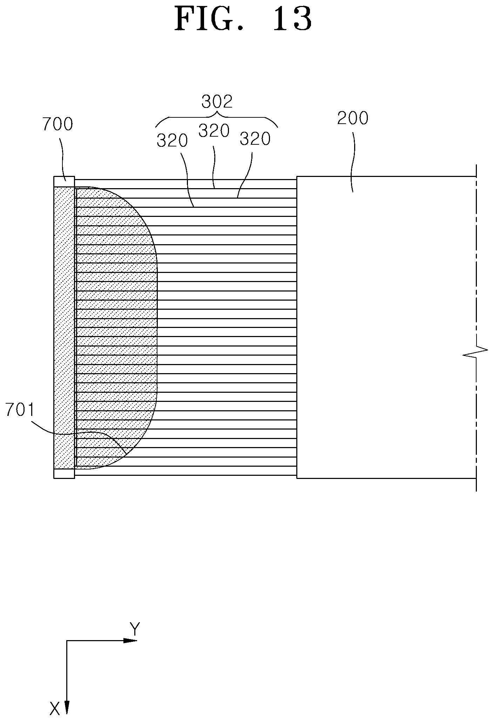

FIG. 12 is a schematic plan view of a second sub-welding line according to one embodiment of the present disclosure, and FIG. 13 is a schematic cross-sectional view of the second sub-welding line according to one embodiment of the present disclosure.

Referring to FIGS. 11 to 13, the second sub-welding line 701, according to the present embodiment, may extend from the second sub-plate 700 to the second tab member 302. The second sub-welding line 701 may be formed by curing a mixture of the second sub-plate 700 and the second tab member 302 that are melted by heat generated during laser welding.

The second sub-welding line 701 may linearly protrude on an outer surface of the second sub-plate 700 disposed to face the second side portion 150. The second sub-welding line 701 may be disposed parallel to the second direction. Therefore, the second sub-welding line 701 may bond the plurality of second tabs 320 stacked in the second direction to the second sub-plate 700.

A plurality of second sub-welding lines 701 may be provided. The plurality of second sub-welding lines 701 may be arranged in the third direction on the second sub-plate 700.

The second current collector 800 may be connected to the second terminal 430 and the second sub-plate 700. The second current collector 800 may electrically connect the second terminal 430 to the second sub-plate 700. The second current collector 800 may be made of an electrically conductive material, such as aluminum, copper, or nickel.

The second current collector 800, according to the present embodiment, may include a second terminal plate 810 and a second current collecting plate 820.

The second terminal plate 810 may be connected to the second terminal 430.

The second terminal plate 810, according to the present embodiment, may be disposed between the electrode assembly 200 and the second terminal 430. The second terminal plate 810 may be spaced a predetermined distance from a lower surface of the second terminal 430 in the third direction. The second terminal plate 810 may be mechanically and electrically connected to the second terminal 430 by a rivet, a bolt, etc. In another embodiment, the second terminal plate 810 may be in direct contact with the lower surface of the second terminal 430 and mechanically and electrically connected to the second terminal 430 by welding, etc.

The second terminal plate 810 may be disposed inside the insulating plate 470 or may be disposed above or below the insulating plate 470. A specific shape of the first body 511 may be changed to have various shapes that may be connected to the second terminal 430 in addition to the shapes shown in FIGS. 3 and 4.

The second current collecting plate 820 may extend from the second terminal plate 810 in the third direction and may be connected to the second sub-plate 700. The second current collecting plate 820 may be disposed to face the second sub-plate 700 in the first direction. The second current collecting plate 820 may be in direct contact with the second sub-plate 700.

The second current collecting plate 820, according to the present embodiment, may include a second center plate 821 and a second extension plate 822.

The second center plate 821 may form a central exterior of the second current collecting plate 820.

The second center plate 821, according to the present embodiment, may be disposed between the electrode assembly 200 and the second side portion 150. The second center plate 821 may be disposed to face the side surface of the electrode assembly 200 located between the neighboring second tab members 302 in the first direction.

Both end portions of the second center plate 821 may extend a distance (e.g., a predetermined distance) toward the electrode assembly 200. Extending distances of both end portions of the second center plate 821 may be variously changed within a distance range in which the second extension plate 822, to be described in more detail below, may be in contact with the second sub-plate 700.

The second extension plate 822 may extend from the second center plate 821 and may be in contact with the second sub-plate 700.

The second extension plate 822, according to the present embodiment, may have a substantially flat plate shape. The second extension plate 822 may extend from the second center plate 821 in a direction parallel to the third direction. The second extension plate 822 may be disposed to face the outer surface of the second sub-plate 700 in the first direction. An inner surface of the second extension plate 822 may be in direct contact with the outer surface of the second sub-plate 700.

A pair of second extension plates 822 may be provided. The pair of second extension plates 822 may extend from both end portions of the second center plate 821 in the third direction and in a direction opposite to the third direction, respectively. The pair of second extension plates 822 may be in contact individually with different second sub-plates 700.

The second current collecting plate 820 and the second sub-plate 700 may be mutually bonded by laser welding. As an example, the second current collecting plate 820 and the second sub-plate 700 may be provided with a second welding line 801 connecting the second current collecting plate 820 to the second sub-plate 700.

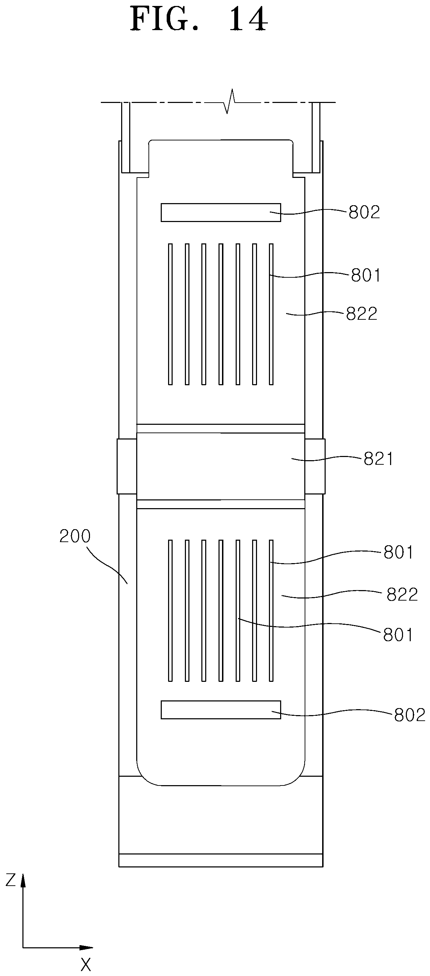

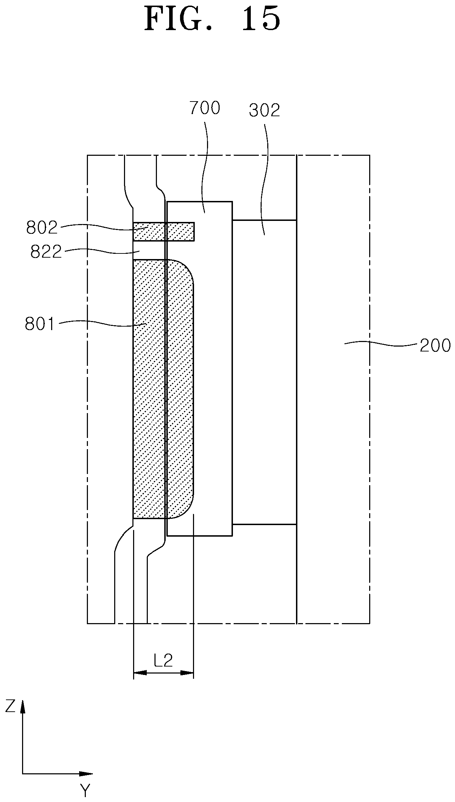

FIG. 14 is a schematic plan view of a second welding line according to one embodiment of the present disclosure, and FIG. 15 is a schematic cross-sectional view of the second welding line according to one embodiment of the present disclosure.

Referring to FIGS. 14 and 15, the second welding line 801, according to the present embodiment, may extend from the second extension plate 822 to the second sub-plate 700. The second welding line 801 may be formed by curing a mixture of the second extension plate 822 and the second sub-plate 700 that are melted by heat generated during laser welding.

The second welding line 801 may linearly protrude on an outer surface of the second extension plate 822 disposed to face the second side portion 150. The second welding line 801 may be disposed parallel to the third direction. Therefore, the second welding line 801 can prevent thermal deformation of the second current collecting plate 820 in the longitudinal direction during operation of the secondary battery 2 by reinforcing the longitudinal rigidity of the second current collecting plate 820 extending in the third direction.

A depth L2 of the second welding line 801 may be about 1 mm. The depth of the second welding line 801 may be a distance between both end portions of the second welding line 801 parallel to the first direction.

A plurality of second welding lines 801 may be provided. The plurality of second welding lines 801 may be arranged in the second direction on the second extension plate 822.

The second current collecting plate 820 and the second sub-plate 700 may be provided with a second reinforcing welding line 802 that reinforces bonding strength of the second current collecting plate 820 and the second sub-plate 700.

The second reinforcing welding line 802, according to the present embodiment, may extend from the second extension plate 822 to the second sub-plate 700. The second reinforcing welding line 802 may be formed by curing a mixture of the second extension plate 822 and the second sub-plate 700 that are melted by heat generated during laser welding.

The second reinforcing welding line 802 may linearly protrude on the outer surface of the second extension plate 822 disposed to face the second side portion 150.

The second reinforcing welding line 802 may be disposed to cross the second welding line 801. As an example, the second reinforcing welding line 802 may be disposed parallel to the second direction. Therefore, the second reinforcing welding line 802 can prevent thermal deformation of the second current collecting plate 820 in the width direction separately from the second welding line 801 during operation of the secondary battery 2.

A width of the second reinforcing welding line 802 may be greater than a width of the second welding line 801. The width of the second reinforcing welding line 802 may be a distance between both end portions of the second reinforcing welding line 802 parallel to the third direction, and the width of the second welding line 801 may be a distance between both end portions of the second welding line 801 parallel to the third direction. Therefore, the second reinforcing welding line 802 can increase a current path between the second sub-plate 700 and the second extension plate 822 and improve the performance of the secondary battery 2 by lowering electrical resistance.

Although FIGS. 14 and 15 show an embodiment in which one second reinforcing welding line 802 is formed on each second extension plate 822, the present disclosure is not limited thereto, and a plurality of second reinforcing welding lines 802 may be formed on each second extension plate 822.

Although an embodiment in which the secondary battery 2 includes the second tab member 302, the second sub-plate 700, and the second current collector 800 has been described above, the present disclosure is not limited thereto, and the second electrode 220 and the second terminal 430 may be directly connected without the second tab member 302, the second sub-plate 700, and the second current collector 800.

Hereinafter, a secondary battery manufacturing method according to one embodiment of the present disclosure will be described.

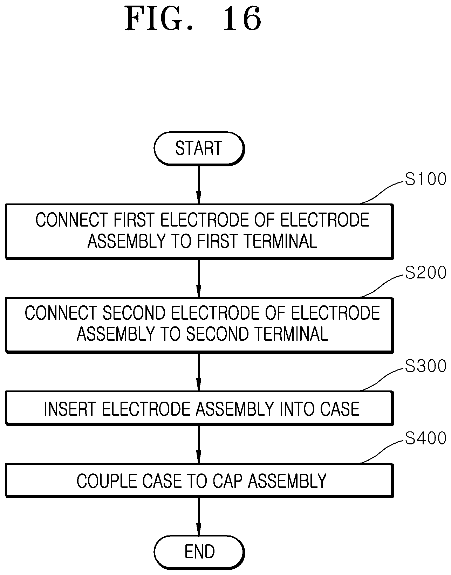

FIG. 16 is a flowchart describing steps of a secondary battery manufacturing method according to one embodiment of the present disclosure.

Referring to FIG. 16, the first electrode 210 of the electrode assembly 200 and the first terminal 420 are connected (S100).

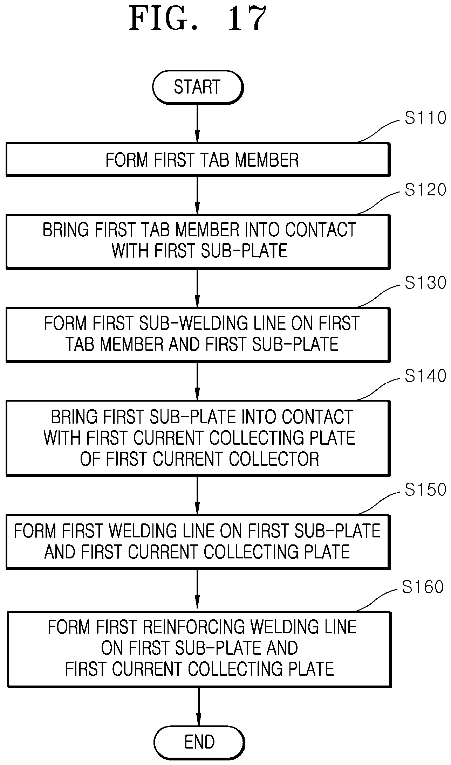

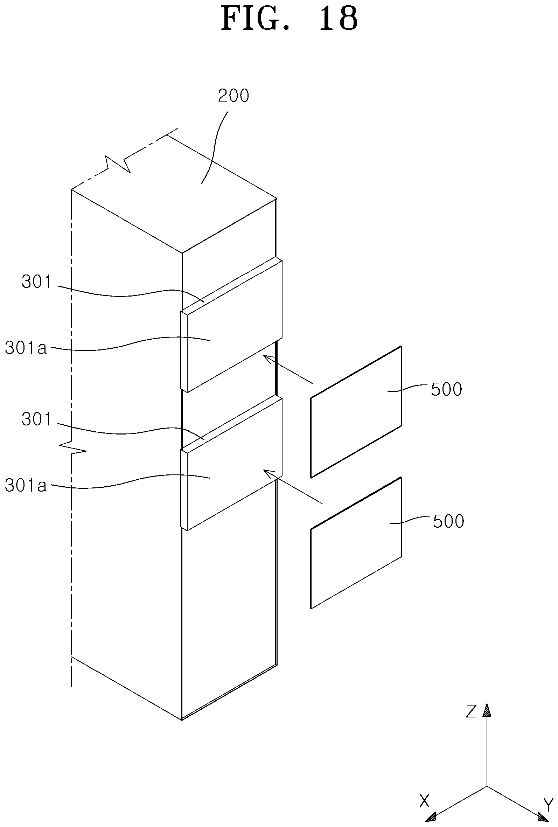

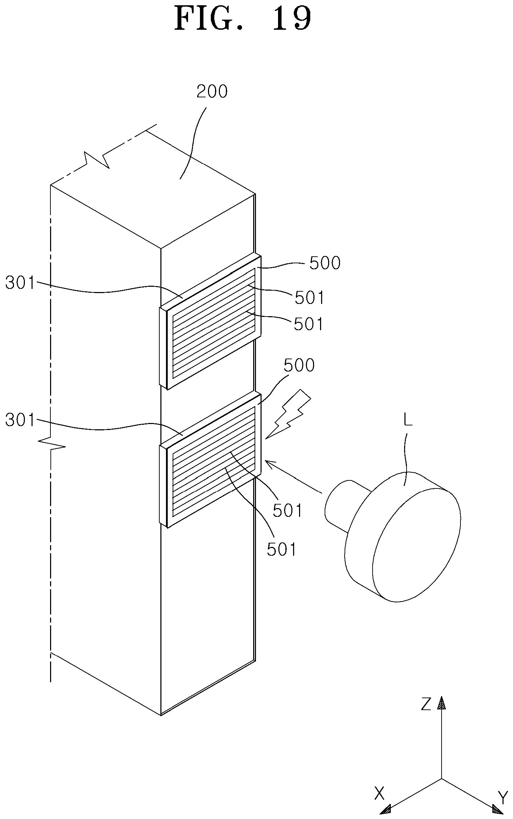

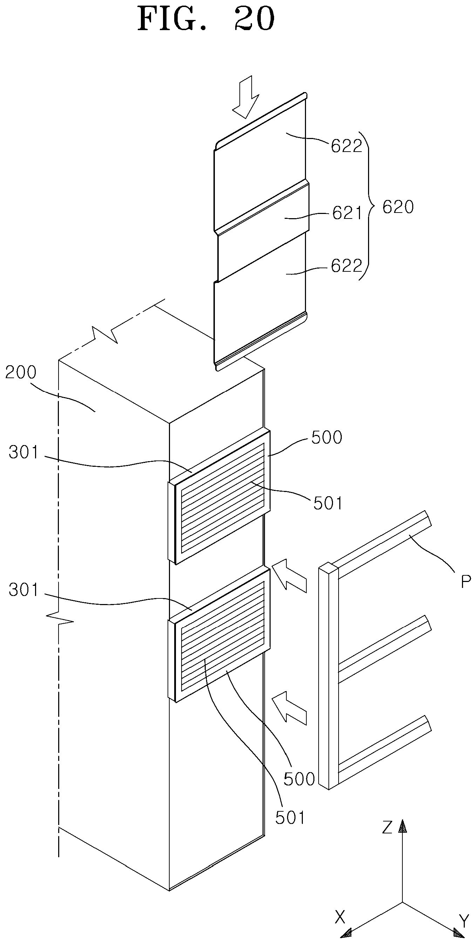

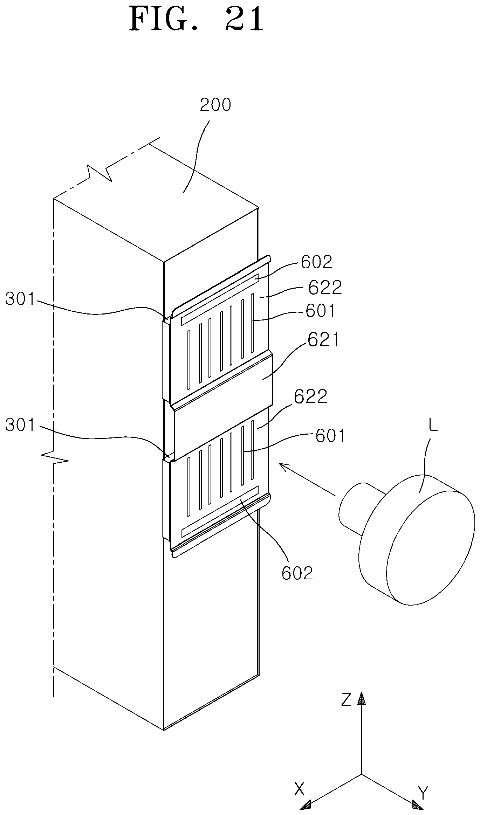

FIG. 17 is a flowchart describing steps of connecting a first electrode to a first terminal according to one embodiment of the present disclosure, and FIGS. 18 to 21 are schematic views showing steps of connecting the first electrode to the first terminal according to one embodiment of the present disclosure.

For example, operation S100, according to an embodiment, is described with reference to FIGS. 17 to 21. First, the first tab member 301 is formed on the electrode assembly 200 (S110).

As an example, operation S110 may be performed by cutting or removing a portion of the first uncoated portion 212 of the first electrode 210 by using a notching jig, etc.

The first tab 310 may be formed in the remaining region of the first uncoated portion 212 in which the above portion is cut off by the notching jig, etc.

According to another embodiment, operation S110 may be performed by manufacturing the first tab 310 separately from the first electrode 210 and then connecting the first tab 310 to the first uncoated portion 212 by welding, etc.

Then, as the plurality of first electrodes 210, second electrodes 220, and separators 230 are stacked in the second direction, the first tab member 301 composed of the first tabs 310 may be formed to extend from one surface of the electrode assembly 200 in the first direction.

After operation S110, the first tab member 301 is brought into contact with the first sub-plate 500 (S120).

In operation S120, the first sub-plate 500 may be disposed to face the first end surface 301a of the first tab member 301 in the first direction.

The first sub-plate 500 may be moved toward the first end surface 301a of the first tab member 301 by any transferrer, such as a gripper or an adsorption (e.g., vacuum) device.

The movement of the first sub-plate 500 may be performed until the inner surface of the first sub-plate 500 is in contact with the first end surface 301a of the first tab member 301.

After operation S120, the first sub-welding line 501 is formed on the first tab member 301 and the first sub-plate 500, and the first tab member 301 and the first sub-plate 500 are mutually bonded (S130).

Operation S130 may be performed by a laser welder L that radiates a laser beam. The laser welder L may be a dual beam laser welder that radiates a ring beam that acts as conduction and a center beam that acts as a keyhole.

In operation S130, the laser welder L may radiate a laser beam in a direction opposite to the first direction from the outside of the first sub-plate 500, that is, in a direction from the first sub-plate 500 toward the first tab member 301.

Some regions of the first sub-plate 500 and the first tab member 301 may be melted and mixed by the heat energy of the laser beam to form the first sub-welding line 501.

The first sub-plate 500 and the first tab member 301 may be integrally bonded as the first sub-welding line 501 is cured.

In operation S130, the laser welder L may linearly radiate the laser beam in the second direction, and the first sub-welding line 501 may be formed in the second direction.

Then, the laser welder L may move a distance (e.g., a set distance) in the third direction and then repeat the above-described process. Therefore, a plurality of first sub-welding lines 501 may be formed to be arranged on the first sub-plate 500 at distances (e.g., set or repeating distances) in the third direction.

Operation S130 may be repeatedly performed on different first sub-plates 500.

The secondary battery manufacturing method, according to the present embodiment, may further include pressing the first sub-plate 500 in a direction opposite to the first direction after operation S130.

In the pressing of the first sub-plate 500 in the direction opposite to the first direction, the first tab member 301 may be compressed in the direction opposite to the first direction, and the first sub-plate 500 may move a distance (e.g., a predetermined distance) in the direction opposite to the first direction toward the electrode assembly 200. Therefore, a space in which the first current collecting plate 620 may be located between the first sub-plate 500 and the first side portion 140 may be secured.

After operation S130, the first sub-plate 500 is brought into contact with the first current collecting plate 620 (S140).

In operation S140, the first current collecting plate 620 may be moved in the third direction by any type of transporter, such as a gripper or an adsorption device.

Operation S140 may be performed in a state in which the first current collecting plate 620 is connected to the first terminal plate 610 and the cap assembly 400. However, operation S140 is not limited thereto and may be performed in a state in which the first current collecting plate 620 is separated from the first terminal plate 610 and the cap assembly 400.

The movement of the first current collecting plate 620 may be performed until the inner surface of the first extension plate 622 is disposed to face the outer surface of the first sub-plate 500 in the first direction.

Then, a pressing jig P may press the first current collecting plate 620 in the direction opposite to the first direction, and the inner surface of the first extension plate 622 may be in contact with the outer surface of the first sub-plate 500.

After operation S140, the first welding line 601 is formed on the first sub-plate 500 and the first current collecting plate 620, and the first sub-plate 500 and the first current collecting plate 620 are mutually bonded (S150).

In operation S150, the laser welder L may radiate a laser beam in the direction opposite to the first direction from the outside of the first current collecting plate 620, that is, in a direction from the first current collecting plate 620 toward the first sub-plate 500.

Some regions of the first current collecting plate 620 and the first sub-plate 500 may be melted and mixed by the heat energy of the laser beam to form the first welding line 601.

The first current collecting plate 620 and the first sub-plate 500 may be integrally bonded as the first welding line 601 is cured.

In operation S150, the laser welder L may linearly radiate the laser beam in the third direction, and the first welding line 601 may be formed in the third direction.

Then, the laser welder L may move a distance (e.g., a set distance) in the second direction and then repeat the above-described process. Therefore, a plurality of first welding lines 601 may be formed to be arranged on the first current collecting plate 620 at distances (e.g., set or repeating distances) in the second direction.

Operation S150 may be repeatedly performed on different first current collecting plates 620.

The first reinforcing welding line 602 may be formed on the first sub-plate 500 and the first current collecting plate 620 (S160).

Although FIG. 17 describes an embodiment in which operation S160 is performed after operation S150, the present disclosure is not limited thereto, and operation S160 may be performed before operation S150 or together with (e.g., concurrently with) operation S150. Also, in some embodiments, the operation S160 may be omitted.

In operation S160, the laser welder L may linearly radiate a laser beam to the first current collecting plate 620 in the second direction at a location spaced apart from the first welding line 601, and the first reinforcing welding line 602 may be formed in the second direction.

In operation S160, the thickness of the first reinforcing welding line 602 may be formed to be greater than the thickness of the first welding line 601.

Then, the second electrode 220 of the electrode assembly 200 and the second terminal 430 are connected (S200). Although FIG. 16 describes an embodiment in which operation S200 is performed after operation S100, the present disclosure is not limited thereto, and operation S200 may be performed before operation S100 or concurrently with operation S100.

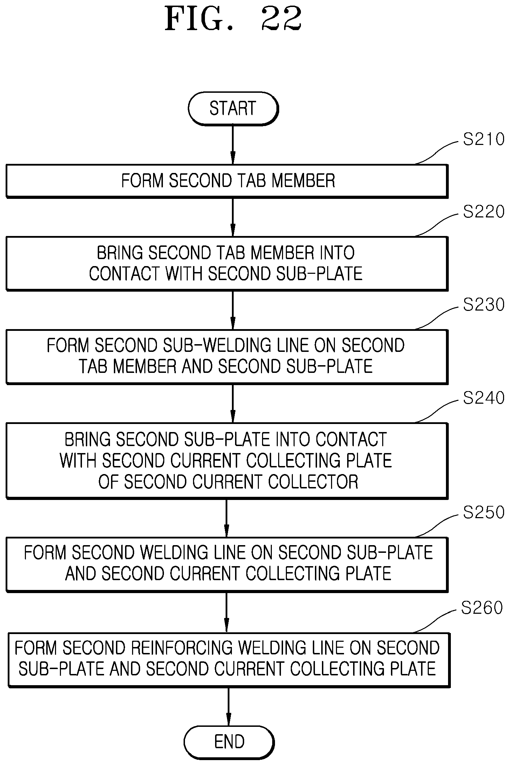

FIG. 22 is a flowchart describing steps of connecting a second electrode to a second terminal according to one embodiment of the present disclosure.

Operation S200 is described with reference to FIG. 22. First, the second tab member 302 is formed on the electrode assembly 200 (S210).

As an example, operation S210 may be performed by cutting or removing a portion of the second uncoated portion 222 of the second electrode 220 by using a notching jig, etc.

The second tab 320 may be formed in the remaining region of the second uncoated portion 222 in which the above portion is cut off by the notching jig, etc.

In another embodiment, operation S210 may be performed by manufacturing the second tab 320 separately from the second electrode 220 and then connecting the second tab 320 to the second uncoated portion 222 by welding, etc.

Then, as the plurality of first electrodes 210, second electrodes 220, and separators 230 are stacked in the second direction, the second tab member 302 composed of the second tabs 320 may be formed to extend from the other surface of the electrode assembly 200 located at a side opposite to the first tab 310 in the direction opposite to the first direction.

After operation S210, the second tab member 302 is brought into contact with the second sub-plate 700 (S220).

In operation S220, the second sub-plate 700 may be disposed to face the second end surface 302a of the second tab member 302 in the first direction.

The second sub-plate 700 may be moved toward the second end surface 302a of the second tab member 302 by any type of transferer, such as a gripper or an adsorption device.

The movement of the second sub-plate 700 may be performed until the inner surface of the second sub-plate 700 is in contact with the second end surface 302a of the second tab member 302.

After operation S220, the second sub-welding line 701 is formed on the second tab member 302 and the second sub-plate 700, and the second tab member 302 and the second sub-plate 700 are mutually bonded (S230).

In operation S230, the laser welder L may radiate a laser beam in the first direction from the outside of the second sub-plate 700, that is, in a direction from the second sub-plate 700 to the second tab member 302.

Some regions of the second sub-plate 700 and the second tab member 302 may be melted and mixed by the heat energy of the laser beam to form the second sub-welding line 701.

The second sub-plate 700 and the second tab member 302 may be integrally bonded as the second sub-welding line 701 is cured.

In operation S230, the laser welder L may linearly radiate the laser beam in the second direction, and the second sub-welding line 701 may be formed in the second direction.

Then, the laser welder L may move a distance (e.g., a set distance) in the third direction and then repeat the above-described process. Therefore, a plurality of second sub-welding lines 701 may be formed to be arranged on the second sub-plate 700 at distances (e.g., set or repeating distances) in the third direction.

Operation S230 may be repeatedly performed on different second sub-plates 700.

The secondary battery manufacturing method, according to the present embodiment, may further include pressing the second sub-plate 700 in the first direction after operation S230.

In the pressing of the second sub-plate 700 in the first direction, the second tab member 302 may be compressed in the first direction, and the second sub-plate 700 may be moved by a distance (e.g., a predetermined distance) in the first direction toward the electrode assembly 200. Therefore, a space in which the second current collecting plate 820 may be located between the second sub-plate 700 and the second side portion 150 may be secured.

After operation S230, the second sub-plate 700 is brought into contact with the second current collecting plate 820 (S240).

In operation S240, the second current collecting plate 820 may be moved in the third direction by any type of transporter, such as a gripper or an adsorption device.

Operation S240 may be performed in a state in which the second current collecting plate 820 is connected to the second terminal plate 810 and the cap assembly 400. However, operation S240 is not limited thereto and may be performed in a state in which the second current collecting plate 820 is separated from the second terminal plate 810 and the cap assembly 400.

The movement of the second current collecting plate 820 may be performed until the inner surface of the second extension plate 822 is disposed to face the outer surface of the second sub-plate 700 in the first direction.

Then, the pressing jig P may press the second current collecting plate 820 in the first direction, and the inner surface of the second extension plate 822 may be in contact with the outer surface of the second sub-plate 700.

After operation S240, the second welding line 801 is formed on the second sub-plate 700 and the second current collecting plate 820, and the second sub-plate 700 and the second current collecting plate 820 are mutually bonded (S250).

In operation S250, the laser welder L may radiate a laser beam in the first direction from the outside of the second current collecting plate 820, that is, in a direction from the second current collecting plate 820 to the second sub-plate 700.

Some regions of the second current collecting plate 820 and the second sub-plate 700 may be melted and mixed by the heat energy of the laser beam to form the second welding line 801.

The second current collecting plate 820 and the second sub-plate 700 may be integrally bonded as the second welding line 801 is cured.

In operation S250, the laser welder L may linearly radiate the laser beam in the third direction, and the second welding line 801 may be formed in the third direction.

Then, the laser welder L may move a distance (e.g., a set distance) in the second direction and then repeat the above-described process. Therefore, a plurality of second welding lines 801 may be formed to be arranged on the second current collecting plate 820 at distances (e.g., set or repeating distances) in the second direction.

Operation S250 may be repeatedly performed on different second current collecting plates 820.

Then, the second reinforcing welding line 802 is formed on the second sub-plate 700 and the second current collecting plate 820 (S260).

Although FIG. 22 describes an embodiment in which operation S260 is performed after operation S250, the present disclosure is not limited thereto, and operation S260 may be performed before operation S250 or concurrently with operation S250.

In operation S260, the laser welder L may linearly radiate a laser beam to the second current collecting plate 820 in the second direction at a location spaced apart from the second welding line 801, and the second reinforcing welding line 802 may be formed in the second direction.

In operation S260, the thickness of the second reinforcing welding line 802 may be formed to be greater than the thickness of the second welding line 801.

After operations S100 and S200, the electrode assembly 200 is inserted into the case 100 (S300).

In operation S300, the electrode assembly 200 may be inserted into the case 100 in the third direction through the opening 160.

In operation S300, the first current collecting plate 620 may be disposed to face the first side portion 140 of the case 100, and the second current collecting plate 820 may be disposed to face the second side portion 150 of the case 100.

Operation S300 may be performed until a lower surface of the cap plate 410 is in contact with the upper end portion of the case 100.

After operation S300, the case 100 is coupled to the cap assembly 400 (S400).

Operation S400 may be performed by laser welding the lower surface of the cap plate 410 to the upper end portion of the case 100. However, operation S400 is not limited thereto, and the case 100 and the cap assembly 400 may be coupled by any suitable coupling method, such as a fitting, bolting, or adhesion method.

Hereinafter, the secondary battery 2 according to another embodiment of the present disclosure will be described.

The secondary battery 2, according to the present embodiment, may differ from the secondary battery 2 described above with respect to FIGS. 1 to 22 with respect to detailed configurations of the first tab member 301 and the second tab member 302.

Therefore, in describing the secondary battery 2 according to the present embodiment, the first tab member 301 and the second tab member 302 will be primarily described.

The description of the secondary battery 2 according to one embodiment of the present disclosure may be directly applied to the other aspects and configurations of the secondary battery 2 according to the present embodiment that are not expressly described hereinafter.

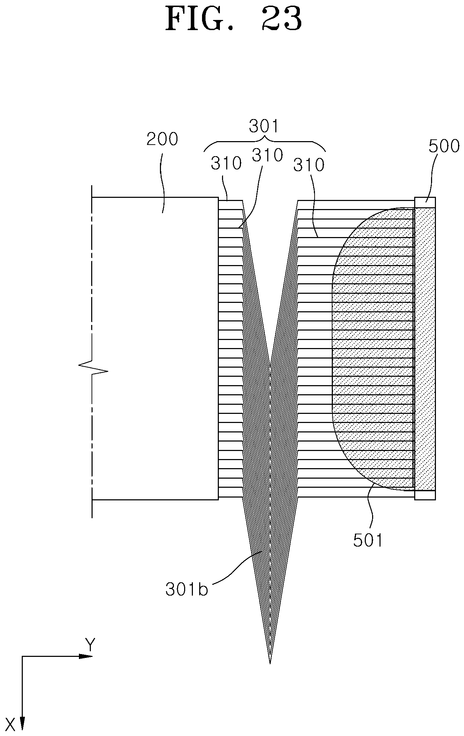

FIG. 23 is a schematic view of a first tab member according to another embodiment of the present disclosure.

Referring to FIG. 23, the first tab member 301, according to the present embodiment, may further include a first bending portion 301b.

The first bending portion 301b, according to the present embodiment, may be a portion of the entire region of the first tab member 301 that is formed by being bent in a direction crossing the first direction.

As an example, the first bending portion 301b may be bent around the third direction. A cross-sectional shape of the first bending portion 301b perpendicular to the third direction may be a V- or U-shape. Therefore, the first bending portion 301b may relatively reduce a length of the first tab member 301 parallel to the first direction, thereby securing a space in which the first sub-plate 500 and the first current collecting plate 620 may be located between the electrode assembly 200 and the first side portion 140 of the case 100.

The first bending portion 301b may be disposed between the electrode assembly 200 and the first sub-welding line 501. Therefore, the first bending portion 301b can prevent the bonding strength between the first tab member 301 and the first sub-plate 500 from weakening due to excessive stress applied to the first sub-welding line 501 during bending processing for the first tab member 301.

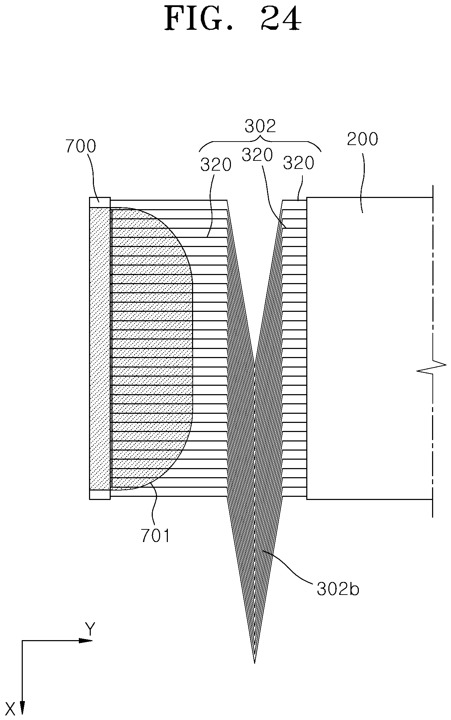

FIG. 24 is a schematic view of a second tab member according to another embodiment of the present disclosure.

Referring to FIG. 24, the second tab member 302, according to the present embodiment, may further include a second bending portion 302b.

The second bending portion 302b, according to the present embodiment, may be a portion of the entire region of the second tab member 302 that is formed by being bent in a direction crossing the first direction.

As an example, the second bending portion 302b may be bent around the third direction. A cross-sectional shape of the second bending portion 302b perpendicular to the third direction may be a V- or U-shape. Therefore, the second bending portion 302b may relatively reduce a length of the second tab member 302 parallel to the first direction, thereby securing a space in which the second sub-plate 700 and the second current collecting plate 820 may be located between the electrode assembly 200 and the second side portion 150 of the case 100.

The second bending portion 302b may be disposed between the electrode assembly 200 and the second sub-welding line 701. Therefore, the second bending portion 302b can prevent the bonding strength between the second tab member 302 and the second sub-plate 700 from weakening due to excessive stress applied to the second sub-welding line 701 during bending processing for the second tab member 302.

Hereinafter, a secondary battery manufacturing method according to another embodiment of the present disclosure will be described.

The secondary battery manufacturing method according to the present embodiment may differ from the secondary battery manufacturing method described above with reference to FIGS. 16 to 22 with respect to processes of operations S100 and S200.

Therefore, in describing the secondary battery manufacturing method according to the present embodiment, the detailed processes of operations S100 and S200, which differ from the secondary battery manufacturing method according to one embodiment of the present disclosure, will be primarily described.

The description of the secondary battery manufacturing method according to one embodiment of the present disclosure may be directly applied to the remaining configuration of the secondary battery manufacturing method according to the present embodiment that are not expressly described hereinafter.

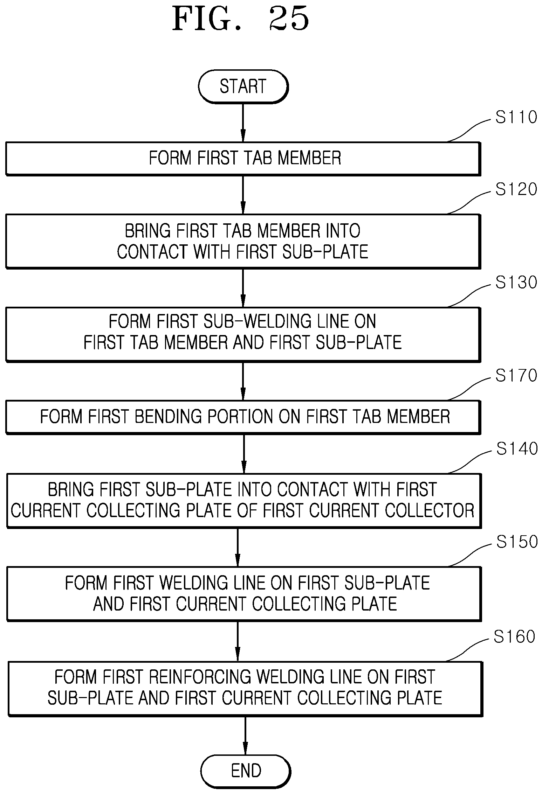

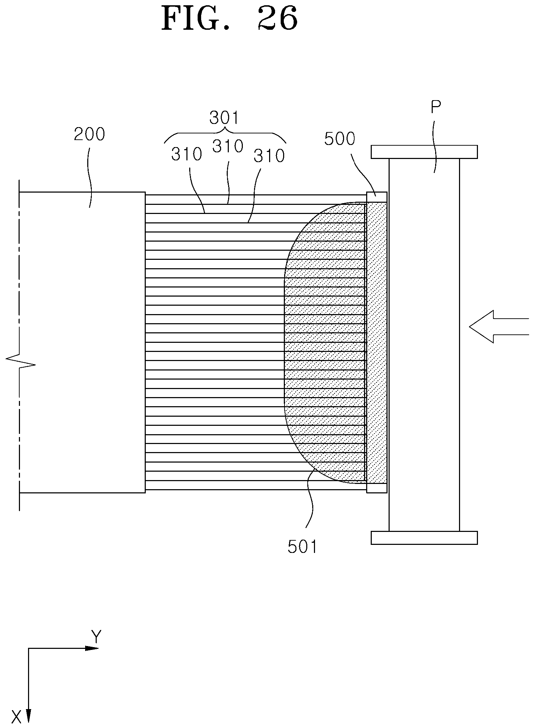

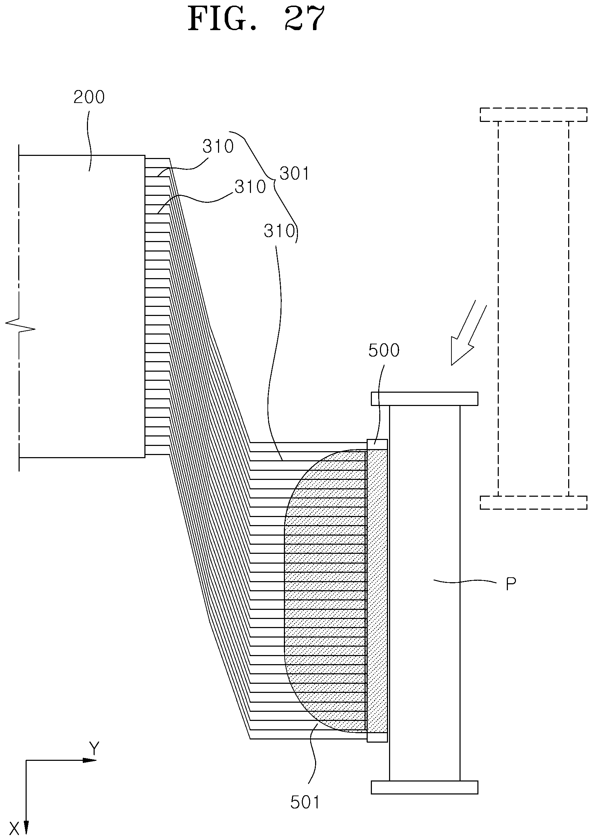

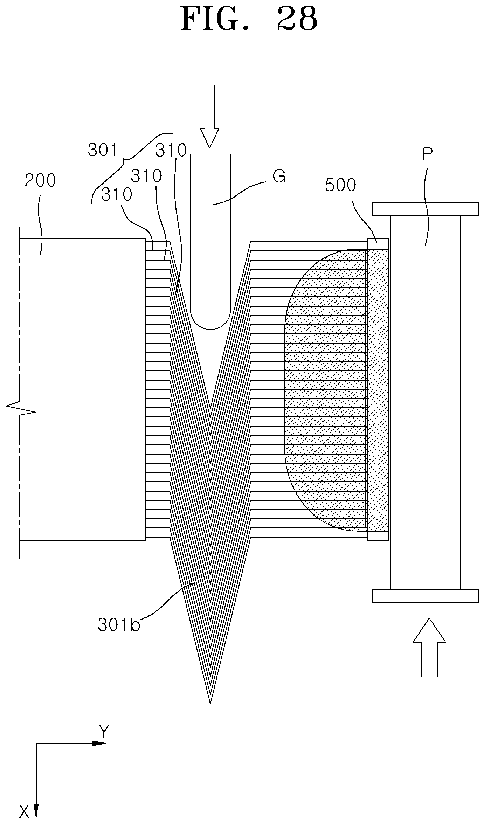

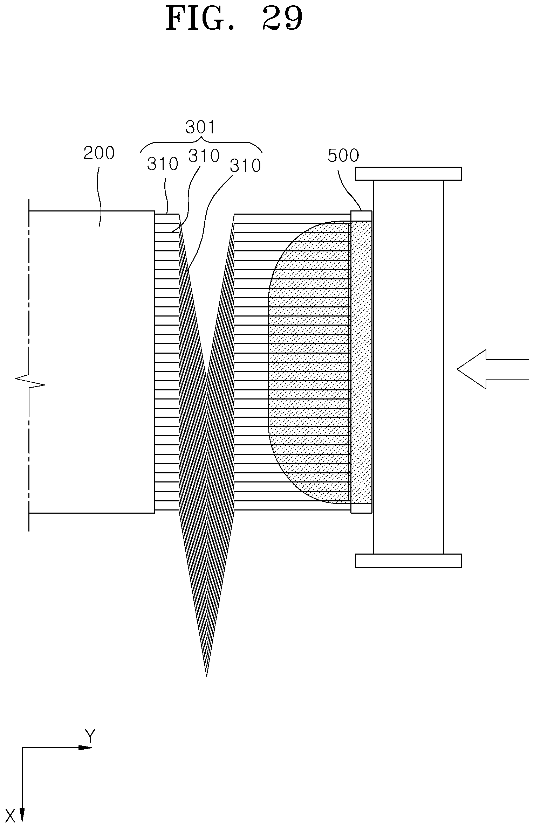

FIG. 25 is a flowchart describing steps of connecting a first electrode to a first terminal according to another embodiment of the present disclosure, and FIGS. 26 to 29 are schematic views shows steps of connecting a first electrode to a first terminal according to another embodiment of the present disclosure.

Referring to FIGS. 25 to 29, an operation of connecting the first electrode 210 to the first terminal 420 (S100), according to the present embodiment, may further include an operation of forming the first bending portion 301b on the first tab member 301 (S170).

Operation S170 may be performed after operation S160.

In operation S170, the first bending portion 301b may be formed by bending a central portion of the first tab member 301 around the third direction.

First, a multi-directionally movable pressing jig P is connected to the first sub-plate 500.

Then, the pressing jig P moves in a direction opposite to the first direction and a direction opposite to the second direction.

Therefore, the pressing jig P may move diagonally toward the electrode assembly 200, and the first sub-plate 500 may move a distance (e.g., a predetermined distance) along the perimeter around a connection point of the electrode assembly 200 and the first tab member 301.

Then, a guide jig G is brought into contact with one side surface of the first tab member 301 disposed in the second direction, and the pressing jig P moves in the second direction. In such an embodiment, the guide jig G may be in contact with the first tab member 301 between the electrode assembly 200 and the first sub-welding line 501.

As the pressing jig P moves in the second direction, the first tab member 301 is bent around a contact point with the guide jig G, and the first bending portion 301b is formed on the first tab member 301.

Then, the guide jig G is separated from the first tab member 301, and the pressing jig P presses the first sub-plate 500 in the direction opposite to the first direction.

A bending angle of the first bending portion 301b is reduced by a pressing force applied from the pressing jig P, and a gap between the first sub-plate 500 and the electrode assembly 200 is reduced.

Then, operations S140 and S150 are performed as described above.

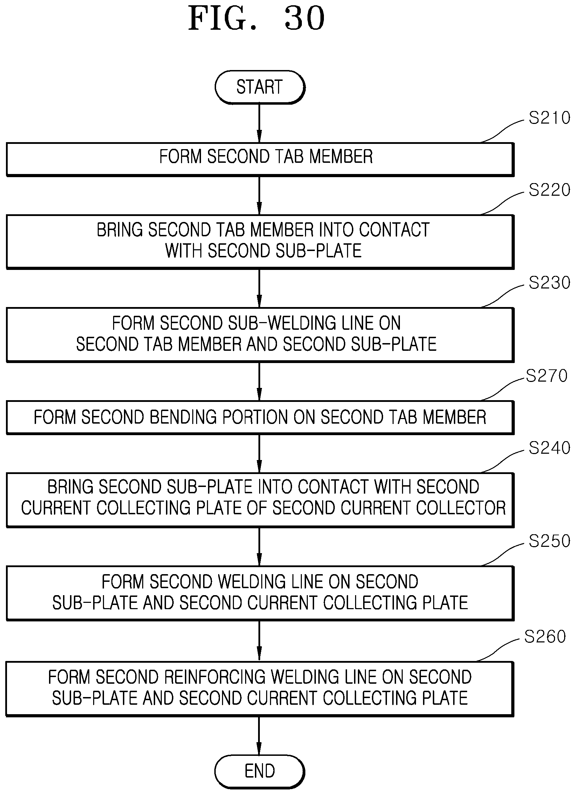

FIG. 30 is a flowchart describing steps of connecting a second electrode to a second terminal according to another embodiment of the present disclosure.

Referring to FIG. 30, an operation of connecting the second electrode 220 to the second terminal 430 (S200) according to the present embodiment may further include an operation of forming the second bending portion 302b on the second tab member 302 (S270).

Operation S270 may be performed after operation S260.

In operation S270, the second bending portion 302b may be formed by bending a central portion of the second tab member 302 around the third direction.

First, a multi-directionally movable pressing jig P is connected to the second sub-plate 700.

Then, the pressing jig P moves in the first direction and the direction opposite to the second direction.

Therefore, the pressing jig P may move diagonally toward the electrode assembly 200, and the second sub-plate 700 may move a distance (e.g., a predetermined distance) along the perimeter around a connection point between the electrode assembly 200 and the second tab member 302.

Then, the guide jig G is in contact with one side surface of the second tab member 302 disposed in the second direction, and the pressing jig P moves in the second direction. In such an embodiment, the guide jig G may be in contact with the second tab member 302 between the electrode assembly 200 and the second sub-welding line 701.

As the pressing jig P moves in the second direction, the second tab member 302 is bent around a contact point with the guide jig G, and the second bending portion 302b is formed on the second tab member 302.

Then, the guide jig G is separated from the second tab member 302, and the pressing jig P presses the second sub-plate 700 in the first direction.

A bending angle of the second bending portion 302b is reduced by a pressing force applied from the pressing jig P, and a gap between the second sub-plate 700 and the electrode assembly 200 is reduced.

Then, operations S240 and S250 are performed as described above.

According to embodiments of the present disclosure, electrical connections of some of first tabs may not be missed by allowing a first sub-plate to restrict the relative movement of a plurality of first tabs constituting a first tab member and constantly maintaining a welding area of the first tab member.

According to embodiments of the present disclosure, because a first current collecting plate is indirectly connected to the first tab member through the first sub-plate, the degree of freedom of welding in forming a first welding line may be secured.

According to embodiments of the present disclosure, because the first welding line is disposed parallel to an extending direction of the first current collecting plate, thermal deformation of the first current collecting plate during operation of a secondary battery may be mitigated or prevented.

According to embodiments of the present disclosure, a space in which the first current collecting plate can be located inside a case may be easily secured by forming a first bending part after the first sub-plate is welded to the first tab member.

While the present disclosure has been described with reference to embodiments as shown in the drawings, these embodiments are merely illustrative and it should be understood that various modifications and equivalent other embodiments can be derived by those skilled in the art on the basis of the embodiments without departing from the scope of the present invention as defined by the following claims.

## Claims

1. A secondary battery (2) comprising:
a case (100);
an electrode assembly (200) inside the case (100);
a cap assembly (400) sealing the case (100) and comprising a first terminal (420) and a second terminal (430);
a first tab member (301) extending from the electrode assembly (200) in a first direction (Y);
a first sub-plate (500) between the electrode assembly (200) and the case (100) and connected to the first tab member (301); and
a first current collector (600) connected to the first terminal (420) and the first sub-plate (500).

2. The secondary battery (2) as claimed in claim 1, wherein the first tab member (301) has a first end surface (301a) crossing the first direction (Y), and the first sub-plate (500) is in contact with the first end surface (301 a).

3. The secondary battery (2) as claimed in claim 1 or 2, further comprising a first sub-welding line (501) on the first sub-plate (500) and the first tab member (301) connecting the first sub-plate (500) to the first tab member (301).

4. The secondary battery (2) as claimed in claim 3, wherein the first tab member (301) comprises a plurality of first tabs (310) arranged in a second direction (X) crossing the first direction (Y), and
wherein the first sub-welding line (501) is parallel to the second direction (X).

5. The secondary battery (2) as claimed in claim 4, wherein the first tab member (301) comprises a first bending portion (301b) bent around a third direction (Z) crossing the first direction (Y) and the second direction (X).

6. The secondary battery (2) as claimed in claim 5, wherein the first bending portion (301b) is between the electrode assembly (200) and the first sub-welding line (501).

7. The secondary battery (2) as claimed in any one of claims 1 to 4, wherein the first current collector (600) comprises:
a first terminal plate (610) connected to the first terminal (420); and
a first current collecting plate (620) extending from the first terminal plate (610) and facing the first sub-plate (500) in the first direction (Y), and
wherein the secondary battery (2) further comprises a first welding line (601) on the first current collecting plate (620) and the first sub-plate (500) connecting the first current collecting plate (620) to the first sub-plate (500).

8. The secondary battery (2) as claimed in claim 7, wherein the first current collecting plate (620) extends from the first terminal plate (610) in a third direction (Z) crossing the first direction (Y) and the second direction (X), and
wherein the first welding line (601) is parallel to the third direction (Z).

9. The secondary battery (2) as claimed in claim 7 or 8, further comprising a first reinforcing welding line (602) on the first current collecting plate (620) and the first sub-plate (500) and crossing the first welding line (601).

10. The secondary battery (2) as claimed in any one of claims 1 to 9, further comprising:
a second tab member (302) extending from the electrode assembly (200) and spaced apart from the first tab member (301);
a second sub-plate (700) between the electrode assembly (200) and the case (100) and connected to the second tab member (302); and
a second current collector (800) connected to the second terminal (430) and the second sub-plate (700).

11. A secondary battery (2) manufacturing method, the method comprising:
forming (S110) a first tab member (301);
bringing (S120) the first tab member (301) into contact with a first sub-plate(500);
forming (S130) a first sub-welding line (501) on the first tab member (301) and the first sub-plate (500);
bringing (S140) the first sub-plate (500) into contact with a first current collecting plate (620) of a first current collector (600); and
forming (S150) a first welding line (601) on the first sub-plate (500) and the first current collecting plate (620).

12. The secondary battery (2) manufacturing method as claimed in claim 11, wherein the first tab member (301) comprises a plurality of first tabs (310) extending in a first direction (Y) and arranged in a second direction (X) crossing the first direction (Y), and
wherein, in the forming of the first sub-welding line (501), the first sub-welding line (501) is formed in the second direction (X).

13. The secondary battery (2) manufacturing method as claimed in claim 12, further comprising forming a first bending portion (301b) on the first tab member (301).

14. The secondary battery (2) manufacturing method as claimed in claim 13, wherein, in the forming of the first bending portion (301b), the first tab member (301) is bent around a third direction (Z) crossing the first direction (Y) and the second direction (X).

15. A battery pack comprising:
a housing; and
a plurality of secondary batteries inside the housing, each of the secondary batteries comprising:
a case (100);
an electrode assembly (200) inside the case (100);
a cap assembly (400) sealing the case (100) and comprising a first terminal (420) and a second terminal (430);
a first tab member (301) extending from the electrode assembly (200) in a first direction;
a first sub-plate (500) between the electrode assembly (200) and the case (100) and connected to the first tab member (301); and
a first current collector (600) connected to the first terminal (420) and the first sub-plate (500).
